Europäisches Patentamt

European Patent Office

Office européen des brevets

(19)

(11) **EP 0 966 690 B1**

(12) **EUROPEAN PATENT SPECIFICATION**

(45) Date of publication and mention
of the grant of the patent:
**06.11.2002 Bulletin 2002/45**

(51) Int Cl.⁷: **G01S 7/02**, G06F 19/00,
G06F 165/00

(21) Application number: **97935222.6**

(22) Date of filing: **30.07.1997**

(86) International application number:
**PCT/US97/13437**

(87) International publication number:
**WO 98/005978 (12.02.1998 Gazette 1998/06)**

(54) **ROBUST GOLF NAVIGATION SYSTEM**

ROBUSTES NAVIGATIONSSYSTEM FÜR GOLFPLÄTZE

SYSTEME ROBUSTE DE NAVIGATION POUR TERRAIN DE GOLF

(84) Designated Contracting States:
**DE ES FR GB IT NL SE**

(30) Priority: **01.08.1996 US 690962**

(43) Date of publication of application:
**29.12.1999 Bulletin 1999/52**

(73) Proprietor: **Leading Edge Technologies, Inc.
Chandler, AZ 85226-3217 (US)**

(72) Inventors:
• **COFFEE, John, R.
Gilbert, AZ 85234 (US)**
• **BINGEMAN, Kirk
Phoenix, Arizona 85044 (US)**
• **RUDOW, Richard, W.
Mesa, AZ 85205 (US)**

(74) Representative: **Czybulka, Uwe, Dipl.-Phys. et al
Patentanwälte
Haft, von Puttkamer
Berngruber, Czybulka
Franziskanerstrasse 38
81669 München (DE)**

(56) References cited:
| | |
|---|---|
| US-A- 4 480 310 | US-A- 4 703 444 |
| US-A- 4 796 191 | US-A- 5 044 634 |
| US-A- 5 056 106 | US-A- 5 364 093 |
| US-A- 5 434 789 | US-A- 5 438 518 |
| US-A- 5 469 175 | US-A- 5 471 393 |
| US-A- 5 507 485 | US-A- 5 524 081 |
| US-A- 5 627 547 | |

**Description**

**Background of the Invention**

The present invention relates generally to position, distance measuring, and navigation systems, and more particularly to a new and improved position, distance measuring, navigation, and information system for use on golf courses to enhance the enjoyment of the game, the speed of play, and the efficiency of management of the course.

In the game of golf, a player is generally more comfortable and likely to achieve a better score if he or she is familiar with the particular course being played. Before starting play on an unfamiliar or infrequently played course, golfers typically familiarize themselves with the layout of each hole. This gives the golfer the knowledge at the tee box of a particular hole being played, for example, as to whether the hole is a 'dog leg left', a 'dog leg right', or straight; whether any hazards, such as sand traps, bunkers, and water traps, are hidden from view; whether and where the range is posted to calculate yardage from the ball's (and the golfer's) present location to the front of the green, the rear of the green, the pin, a key hazard, or a desired lay up position for the green approach shot.

Customarily, golf courses market informative books on the course in the pro shop, to indicate layout features for each hole and yardage from a few locations along the hole to the center of the green. Also, yardage markers typically are provided on sprinkler heads along the route of each hole, so that the player will know the range from that point to the center of the green. These playing aids provide information on the hole layout and location of hazards, and also allow the golfer, by pacing off yardage from the ball to the nearest sprinkler head, to estimate yardage from the ball to the center of the green. Such measures are by no means precise, but do enhance one's knowledge of the hole, and thereby, an opportunity to improve one's game. They also exact a cost -- slowing the pace of play of every golfer behind the one or more who are familiarizing themselves with the course, pacing off yardage, and so forth. Slow play has an adverse effect on the course's daily revenue, as well *as* on other players' enjoyment of the game.

Various proposals have been made to improve golf course information systems. The intent of these ostensible improvements has been to reduce the average player's score; to increase enthusiasm and speed of play; and to enhance the player's knowledge of the course regarding every hole, the yardage from the ball or "lie" to the green, the distance and bearing to the pin, and the location of hazards. Early proposals included use of buried electrical wires in various layouts on the course for interaction with mobile overland components, such the golf information system disclosed in U.S. Patent Number (USPN) 5,044,634 to Dudley ("the Dudley '634 patent"); and use of radio direction finding or triangulation techniques, to inform the golfer of gross features of the course and distances from specific markers to the pin or flag for the hole being played, such as those described in USPN 4,703,444 to Storms, Jr. ("the Storms, Jr. '444 patent") and USPN 5,056,106 to Wang.

Twenty some odd years ago, the U.S. government sponsored and established a Global Positioning System (GPS) using space satellites and ground based stations as a means for determining distance, range, and position for various governmental purposes, but which has become quite useful in many industrial and commercial applications as well. A number of earth-orbiting satellites provide reference points from which to determine the position of a point on or near the earth, using the ground-based receivers. The orbits of these satellites are monitored by the ground station GPS receivers, and the travel times of signals received from the satellites are used to measure distance to each satellite. Each signal from a satellite is coded to permit the receiver to determine the elapsed time between transmission of the signal from the respective satellite and reception at the GPS receiver antenna, and thereby to calculate the distance as the product of that elapsed time and the speed of light. Receivers need not be restricted to large ground stations, but are available in portable, mobile and hand-held versions, for a multitude of private navigation, position and distance-measuring systems.

Distance measurements to three GPS satellites can accurately define the position of an object (i.e., that of the GPS receiver, whether of the stationary or portable type) on or near the surface of the earth. A fourth satellite provides a distance measurement that serves to verify clock timing within the GPS system. With several satellites in "view", and through the use of a computer, the GPS receiver theoretically can calculate distances virtually instantaneously with great accuracy. In practice, however, even small errors that typically occur in the calculated measurement of satellite signal travel time from system and natural phenomena severely reduce the accuracy of the distance and position calculations. Error causing phenomena include atmospheric propagation, receiver contributions, satellite ephemeris, and satellite clock. Furthermore, the government purposely introduces errors in the satellite signals to deny civilian users full accuracy. The combined effect of these errors can be as high as 100 meters or so. Erroneous measurements of this magnitude may be tolerated in many GPS-based measurement systems, but would be unacceptable in a golf course positioning and distance measuring system.

Nevertheless, more recently GPS has been suggested for use on golf courses, for precisely the same purposes as the system is used in other position and distance-measuring applications. In USPN 5,364,093 to Huston ("the Huston '093 patent"), for example, a position and distance measuring system for a golf course is disclosed that employs conventional differential GPS (DGPS). USPN 5,438,518 to Bianco ("the Bianco '518 patent") also discloses golf course application of a conventional DGPS position and distance measuring system. DGPS is a widely used government-sponsored improvement of the GPS system, intended to reduce errors in distance measuring applications by broadcasting error correction information from a ground receiver of known location in the vicinity of the user. In DGPS, two GPS receivers are used, one at a known fixed position, so that the difference between that known position and its position calculated from the satellite GPS signal fixes the error in the signal. The fixed position (reference) receiver provides a continuous correction for use by all other receivers, which may be mobile, within its reception area. Knowledge of the error allows all distance and position calculations at the user's receiver to be corrected.

Conventional DGPS can reduce errors in position calculations to allow accuracies of within about five meters -- quite suitable for most commercial needs, but still unacceptable for a golf course distance measuring system. The same conventional DGPS system as is used to determine the location of a ship relative to a land-based point of interest may be used to determine the location of a golf cart receiver relative to the pin on a hole of a golf course. Weather conditions and terrain (unless severe, or interfering with communication, whether line of sight or otherwise) have little effect on position determination in the GPS system, and few restrictions are imposed on size or location of a user's receiver.

Details of DGPS are readily available from a number of sources, an example being Blackwell, "Overview of Differential GPS Methods", *Global Positioning System,* vol. 3, pp. 89-100, The Institute of Navigation, Washington, D. C. (1986). The Blackwell (Stanford Research Institute International) paper details four differential GPS techniques, one of which is virtually identical to that proposed by the Huston '093 patent.

In co-pending patent application serial numbers, 08/423,295 and 08/525,905, filed April 18, 1995 and September 8, 1995, respectively, assigned to the same assignee as the present application ("the '295 and '905 applications"), improvements are disclosed in golf course positioning and yardage measuring systems utilizing DGPS, but which provide considerably greater accuracy and reliability than is available with conventional DGPS by, among other things, utilizing unique filtering algorithms. In systems according to the '295 and '905 applications, a relatively inexpensive communications network between a base station and golf carts utilizes its allocated bandwidth for data transmission in a much more efficient manner, and with a variable length communication network for easily and efficiently adding or removing golf carts from the network. The systems of those co-pending applications also have the capability of creating, storing and displaying high resolution color graphics that include a layout of all or a selected group of holes of the course on the base station monitor, and a layout of the current hole, as well as to provide color advertisements and pro tips to the users on the monitors in the golf carts on the course. These systems have the capability to detect when the golf cart is within predetermined zones or regions of the course for use in unique features such as automatic display of the current hole on the cart monitor, measuring the pace of play for each hole, and automatic pop-up golf tips and advertisements on the cart monitor as the cart transitions from one hole to the next; as well as to provide improved techniques for surveying the layout of the golf course and collecting data therefrom for post-processing and storing of such data for later retrieval and display. Improved techniques are also provided for mounting the monitor in the roof of the cart to give the user exceptional color readability in sunlight.

The systems disclosed in the aforementioned prior co-pending applications are marketed under the name PROLINK[1] yardage and course management system (referred to herein more briefly as the "PROLINK system"). The PROLINK system includes a golf cart-based subsystem, but may be packaged alternatively or additionally into a hand-held unit carried by the golfer, both being included within the generic terminology of a mobile unit, a portable unit, or a roving unit. Each roving unit uses state-of-the-art DGPS technology, together with considerable enhancements in hardware and software provided by the system of those inventions.

The PROLINK system creates, stores, and displays a color or black and white graphical representation or map of the golf course on a video monitor in the cart or a liquid crystal display ("LCD") of a hand-held unit. Each hole of the course is selectively displayed with all of its hazards and features, with the golfer's fixed or changing position (strictly speaking, the cart's position in the case of a cart-based system) superimposed thereon in real time during play of the hole. The system provides the golfer with an accurate measurement of the distance (in yards or meters) from the current tee box to the current pin placement (both of which may be subject to daily change by the course manager or administrator), as well as from any other location of the cart on a hole to the pin or any other feature of the hole. In essence, an "electronic yardage and hole feature book" is presented by which to enhance club selection for each lie of the ball during play.

The PROLINK system also displays personal messages to a golfer at a selected cart, and provides informative tips ("pro tips") which may be programmed into the system for broadcast at specific holes, and system-wide advertising and promotional messages. A course management subsystem enables the course administrator (usually, the course professional golfer who operates the pro shop and offers lessons to players) to track the location of and to communicate selectively with each golfer or all golfers on the course through the system-based carts, to monitor and improve the pace of play, and to compile a statistical data base on course operations. Personal messages may be sent to the selected carts and emergency or other overall messages may be sent system-wide at any time, while "pro tip", adver-

[1] PROLINK is a trademark of Leading Edge Technologies, Inc. of Chandler, Arizona, the assignee of the invention disclosed in this patent specification.

tising or promotional messages may be activated based on the cart's location on the course, such as the time between exiting the green of a hole to entering the tee box of the next hole.

The cart-based or other type of roving unit of the PROLINK system provides advantages to the golfer without burdening or significantly changing the way the course or any particular hole is played, or how business is conducted by course management. Advantages include (1) real-time, accurate indications of distance (typically within two meters) from the cart to significant course features -- green, pin, hazards in fairway, etc., (2) a large (e.g., 7.5-inch), high resolution, color display of a map of entire course, individual hole, or green or other detailed features, on the cart monitor, and (3) the capability of individualized communications and messaging to and from the cart.

The position of the cart is displayed in real time on the map of the hole being played, both on the individual cart monitor and on a monitor at the course management station. As the cart moves, the yardage-to-pin and yardage to hazard calculations are automatically updated on the display. A separate movable cursor on the display allows the player -- by simply appropriately positioning the cursor -- to obtain a precise yardage measurement to any feature shown on the hole map. Another feature of the system is the capability to read the shot distance of each shot by simply pressing a "shot distance" button adjacent the display.

The golfer may selectively view the entire course layout or obtain a display of an individual hole, in full color, before, during, or after play. An automatic zoom feature increases the selected target area resolution, such as to view the contour of the green or the details of a particular hazard. If desired, the roving unit can record an entire game -- stroke-by-stroke -- to allow it to be replayed at home or elsewhere from a computer disk as it was originally displayed on the cart monitor. Alternatively, a "hard copy" printout of each shot, from tee to fairway to green, may be obtained from a club house computer. The player can thus analyze the game, and devote appropriate time to problem areas to improve skills before the next round of play.

The most significant decision on each shot is selection of the golf club to play the lie relative to the pin location, hazards, and so forth. The PROLINK system enables the player to make consistently better and faster club selection. At the same time, the system enables the golfer to correct natural inconsistencies in swing that may otherwise be attributable to inadequate information concerning target distance and course layout.

In operation of the PROLINK system, the hole display and yardage functions in the cart system are activated automatically at the beginning of each hole. Yardage from the roving unit to the pin and to key hazards such as traps and water are displayed and updated at all times on the display as these features are viewed. Four arrow keys allow the player to move a cursor around the hole display and obtain yardage to any point on the course. A single button press may, for example, provide a pro tip created by the course professional, or a blow-up of the green complete with contour lines for the critical approach shot or putt. In addition, the player's driving distance is displayed automatically after a tee shot, and the distance to the pin for the next shot is available automatically. After the player reaches the green, a screen allows advertising, promotional messages, and any other information, such as course trivia, to be displayed. When the player approaches within a fixed distance of, or reaches the next tee, the PROLINK system automatically moves to the next hole layout display for continuing play. Furthermore, the PROLINK system is non-intrusive in that a user could play an entire round of golf without pressing a single button and still obtain precise yardage to the daily pin placement and key hazards. The user is only required to interact with the system for advanced features, which include pro tips, enhanced green views and shot distance, to name a few.

The course management portion of the PROLINK system includes a base station computer unit, receiver/ transmitter unit and video monitor in the clubhouse (or other desired location) to give the course administrator better insight into daily operations and revenues. Principal advantages of the course management portion include (1) the capability to identify, locate and monitor movement of every golf cart on the course in real-time, with precise positioning during play on each hole, (2) use of that knowledge to pinpoint the location of and to allow analysis of the cause of bottlenecks, toward improving speed of play, and greater enjoyment by all players, (3) compilation of an extensive computerized data base to provide management and designated staff personnel with accurate statistical insight into course operations and techniques for instituting improvements, and (4) availability of a convenient source of communication and messaging to all roving units, with potential concomitant revenue enhancement through advertising and promotions.

The data compiled as part of the club's data base is readily used for management information system ("MIS") reporting to management and board members, and to provide reports complete with tables, charts and graphs on an as-needed basis for club members and players, or, in the case of municipal and other public courses, to provide necessary reports to the appropriate authorities as well as statistical and course information to players. The compiled data may include date and times rounds were commenced, player names for each round, tee times, actual start times, actual finish times, time required for each round, time required for each hole, strokes per hole, daily pin placements, and total rounds, by way of example.

In addition to those other advantages, the ranger staff for the course which is used to monitor play and to assess and correct course problems, may be reduced in size by virtue of the wealth of information available to the course administrator from the PROLINK system. Despite the smaller number of rangers, they may be used more efficiently by dispatching them to precise locations where bottlenecks or other barriers to efficient play are occurring. Each roving unit is assigned a unique ID number which is transmitted by the system for periodically monitoring (and displaying) (e.g., every 2 to 16 seconds, depending upon the number of carts on the course) each unit during play, for identifying selected golfers for messages, or those who may be causing problems, or for other purposes.

In particular, the PROLINK course management system includes a Course Management Computer (CMC), with a combination of radio frequency (RF) data links and personal computer (PC) modem links that allow the base station and golf carts to communicate and share information with one another. The network communication system of the PROLINK system employs a cost-effective and bandwidth efficient technique for the transmission of data between the base station and the golf carts. Frequency shift keying (FSK) is the modulation technique chosen for data transmission because FSK is both inexpensive and simple to implement thereby minimizing cost of the overall PROLINK system. Although FSK lacks bandwidth efficiency relative to other, more costly, modulation techniques, such as phase shift keying (PSK), the PROLINK system makes very efficient use of available bandwidth by employing a precise, time controlled time division multiplexed (TDM) scheme that is synchronized to a precise pulse per second (PPS) signal available from a GPS receiver for allocating to each cart and the base station a precise time to transmit its respective data. This ensures that when one cart is actually transmitting, neither any of the other carts on the course nor the base station is also transmitting. Such a precise, time controlled TDM communication network obviates the need for the base station to poll each of the carts to request it to send information and, thus, substantially increases the bandwidth efficiency of the communication network.

The PROLINK system also employs a unique technique and method for collecting data indicative of the layout of the golf course including such features as tee boxes, greens, fairways, water hazards and sand traps. Such collected data is then post-processed and efficiently stored in memory in vector form for later retrieval and display. Moreover, once the data representing the golf course is stored in memory, such data can be used to efficiently determine the location of a golf cart relative to predetermined zones or regions. To that end, the PROLINK system utilizes a unique zone detection algorithm and creates a number of different zones corresponding to actual areas or objects on the golf course. Such zones are created corresponding to a tee box area or a green area of a particular hole on the course. Accordingly, the PROLINK system has the capability to detect a golf cart to be within an actual area on the golf course when the coordinates of the golf cart lie within the corresponding zone.

By the use of such a zone detection algorithm, various features of the PROLINK system are readily implemented. Such features include automatic hole display on the cart monitor as the cart enters the tee box zone of a new hole, and automatic pop-up, high resolution, color advertisements when the cart is in transition from one hole to the next. Additionally, the speed of play for a hole may be obtained by measuring the time from when a golf cart enters the tee box zone of a hole to when the cart exits the green zone of that hole.

Despite the capabilities of GPS and DGPS systems for their intended purpose, in golf course and other positioning, distance measuring, and ranging applications, such systems generally suffer from loss of signal and, therefore, loss of communication and capability, when the roving unit moves behind an obstruction. On the golf course, this is particularly troublesome where the course is heavily treed, or quite hilly, or has on-course or adjacent buildings or other structures, or all of these types of obstructions, of sufficient dimensions to obscure or interfere with strong signal transmission. In these conditions, the golfer is inevitably faced with a relatively frequent and sometimes lengthy out-of-service screen on the monitor of his or her cart. As golfers become more reliant on such systems, frequent out-of-service indications tend to be quite frustrating and can impact adversely on the player's game, so that the system may end up costing the player strokes, rather than improving the game.

It is, therefore, a principal object of the present invention to provide substantial improvements in golf course-based position, distance-measurement, navigation, and information systems, which do not suffer outages when encountering signal-interrupting or interfering obstructions.

The relatively simplistic GPS-based golf course distance measuring systems exemplified by the disclosures of the Huston '093 patent and the Bianco '518 patent are not sufficiently accurate to be a significant factor in actual use on a golf course, much less capable of dealing with the serious problems of communication obstructions encountered on the course. Even the improvements offered by the systems disclosed in the co-pending '295 and '905 patent applications, although easily meeting the reliability and accuracy requirements of the golfer and course management of a relatively large percentage of the golf courses around the United States, are unable to provide a satisfactory solution to the problem of courses in which all or a large number of holes are surrounded by trees, or which are built on rolling hills, or which have nearby structures of substantial height.

Trees are known to attenuate GPS satellite signals and can often mask reception completely. Also, when a golf cart is near a hill, the signals from low elevation satellites just below the crest of the hill are not received. Likewise, if the cart is on the side of even a modest hill, the tilt introduced in the GPS antenna can mask low elevation satellites away from the tilt direction. Generally, at least one of two problems occurs: 1) the masking of GPS satellites by the obstruction(s) leaves too few visible satellites available to be simultaneously tracked to allow computing a navigation solution at all, or 2) the remaining unmasked (i.e., visible) satellites have poor geometry characteristics which significantly reduce yardage accuracy. Most golf courses are designed to offer not only the beauty of trees and hills, but the challenges that those course features represent to golfers playing the course -- the very same features that are a substantial part of the cause of the two problems mentioned above for GPS-based navigation systems. Furthermore, cannot be expected that courses will be re-designed or designed in the future to accommodate distance-measurement or navigational aids, at the expense of beauty and challenges. Consequently, GPS-based systems are likely to suffer significant outages when used during play on more than one-half of the current 14,000 golf courses in the United States, because of such course features. As a practical matter, this renders such systems unsuitable for use on these courses. Moreover, the GPS-based systems are only marginally suitable -- suffering some outages because of obstructions -- on another one-fourth of the U.S. courses. Thus, fully three quarters of the U.S. courses could not properly support installation of the GPS-based yardage measurement systems. A very similar situation prevails on courses in other countries, such as Japan.

In part, this is a reason that alternative systems may have any following. Buried wire systems, such as proposed in the Dudley '634 patent, avoid the obstruction problem but have myriad others, making them undesirable from the start. Dead reckoning systems, of which the Storms, Jr. '444 patent is exemplary, avoid the line-of-sight constraints that adversely affect GPS systems, but universally suffer from degraded accuracy over a period of time or over distances for reasons that are not present with GPS techniques. Methods for updating the dead reckoning systems to correct for the accumulation of these errors have required significant input or attention from the golfer for adequate performance. This disadvantage has resulted in dead reckoning-based yardage measurement systems having little popularity in the golf market. Any system that requires the golfer to turn his or her attention away from the game and toward attending to the effectiveness of a system that purports to be an aid to improving the golfer's game is not likely to be well received.

To avoid having to directly confront these types of problems occasioned by both GPS-based and dead reckoning-based systems, the prior art systems have either displayed only grossly artificial estimates of yardage which tended to be highly inaccurate, or have simply gone out of service so that no yardage information was available to the golfer at all, during periods when these conditions prevailed. In either case, the golfer has lost the benefit of reliable, accurate measurements of yardage which were expected from these systems. Indeed, such measures of either falsifying information or withdrawing from providing information in the face of these problems have caused them to be viewed as untrustworthy on "problem" courses to a large segment of the golfing public that has had the opportunity to play courses equipped with such systems.

In US-A-4,703,444 a system for determining distances on a golf course is disclosed. Said method using a golf-cart-based dead reckoning navigation system (DRN system) to assist play of the course. The DRN system of each golf cart (16) on said course is initialized, whereby the respective said golf cart is repositioned adjacent the new position of a golf ball after each shot of the golf ball by a player using the golf cart. From each said repositioning of said respective golf cart the coordinates of the new position of said golf ball are determined by the DRN system relative to said DRN system initialisation. The new position coordinates are used in conjunction with known locations of fixed hole features such as a designated cup or hazard on a hole of the golf course being played for calculating the distance from the new position coordinates to the designated cup or other selected ones of the fixed hole features.

This US patent is the state of the art; the features of this document are included in the introductory part of the present claim 1.

That reckoning systems and GPS systems have been used for a long time in navigation, including proposals for golf course navigation. US-A-5,438,518 discloses a portable distance tracking system for use by a player on a playing field, e.g. a golf course. The systems includes a mobile interface unit that has a memory element, position interface electronics, a data processor and a player interface. The memory element stores digitized map representations of playing fields. The position interface electronics receivers position indicative signals that are representative of a geographical location of the mobile unit from an external source. The data processor couples to the memory element and to the position interface electronics and correlates the geographical location to a field location of the mobile interface unit on the golf course. The processor also determines the distance from the mobile interface unit to a first landmark. The player interface is coupled to the data processor and communicates the distance between the mobile interface unit and the first landmark to a player. The landmark is e.g. a flag location at a select hole on the golf course.

The object of the invention is in particular to provide a method which delivers robust distance measurement on a golf course even if the golf course is very hilly or treed. In particular, it should be possible to perform the calibration of the golf carts in a simple and reliable manner.

These objects are attained by the features of claim 1.

## Summary of the Invention

The present invention represents a significant improvement over the prior art of GPS-based and dead reckoning-based yardage systems by substantially increasing the amount of time that a high accuracy yardage estimate is available to the golfer, thus improving the reliability of the measurement system, especially on courses with trees and uneven terrain. To that end, the invention provides a golf course yardage and information system which relies only peripherally on GPS or DGPS, and instead employs the advantages of a dead reckoning-based yardage system, with support from DGPS techniques for calibration purposes only, and combined with the full-featured management and information capabilities of the PROLINK system.

Navigation technology presently used in military and commercial aircraft commonly combines multiple sources of navigation information to produce a more robust and reliable result over a range of operating conditions which is wider than any single source has the capability to provide. For example, an inertial navigation system, which is an example of a dead reckoning-based system, provides a high bandwidth output of an aircraft's position, velocity, and attitude as often as fifty times per second, but has the undesirable tendency to drift significantly over time. In contrast, a GPS satellite receiver provides a less desirable low bandwidth output of position and velocity, typically only once per second, but does not suffer from an accumulation of error over time as occurs with the inertial navigation system. The system of the present invention combines the desirable attributes of a dead reckoning system with certain aspects of a GPS system, through optimal estimation computer algorithms preferably using a Kalman filter, to achieve a significant synergistic improvement in performance of a golf course position, distance measurement, navigation, information, and course management system over a much wider operating envelope than has heretofore been achieved.

Accordingly, it is a fundamental aim of the present invention to provide such a golf course operating system that represents a highly synergistic combination of a non-GPS-based position, distance measurement, and/or navigation system with GPS calibration to assure consistent accuracy and reliability throughout play over the entire course, irrespective of the presence of obstructions to consistent line of sight to GPS satellites. Another important objective of the invention is to provide such a system which gives reliable information as to the golfer's location on the golf course with an accuracy of better than two yards 98 percent of the time over the type of challenging terrain which is expected to be encountered on the better golf courses of the world. Yet another aim of the invention is to provide such a system which is both robust and cost effective. In the latter regard, it is of little or no value to the golfer to provide a highly accurate, interference impervious system which is either prone to breakdown and failure or so expensive to use, or both, that it is no more than a museum curiosity or a conversation piece.

Before describing the best mode presently contemplated for practicing the golf course position, distance measurement, navigation, and information system of the invention, by way of a preferred embodiment, it bears emphasis that the present invention is not limited to providing such results and information in the context of golf courses. Rather, it may be extended to any number of other consumer, commercial, and industrial applications of satellite navigation and digital communications technology where problems of GPS or DGPS signal loss can occur whether because of physical obstructions in the vicinity of the roving unit, line of sight problems, or interference from other, stronger signals. Thus, although the present invention will be described in the context of a system and method for a golf course application, embodied in what is referred to herein as the ACUTRAK[2] golf course measurement and management system (or more briefly, as the "ACUTRAK system"), the invention is not limited to that application but is usable in virtually any commercial endeavor where it is necessary or desirable to keep track reliably of the accurate position, distance relative to a given point, and/or navigation of a host of roving units, such as in a package delivery system, or a transportation system, or an agricultural planting and harvesting system, where obstructions or other interference abound.

The ACUTRAK system is golf cart-based, but could conceivably be packaged alternatively or additionally in smaller vehicles, or even a set of golf bag wheels equipped with a mobile unit or a hand-held unit used with a pedometer version of the wheel-tracking system disclosed herein. The generic terminology "mobile unit", "portable unit", "roving unit", and the like is intended to apply to any version that utilizes high bandwidth dead reckoning navigation technology which is calibrated by low bandwidth satellite navigation technology. Advantages provided by the synergistic use of these technologies are enhanced by additional features and aspects which are incorporated in hardware and software of the present invention to provide, for example, fixed distance measurements, in contrast to varying distance measurements resulting from the player's (or more generally, the user's) movement, information communication between base station and roving units, and traffic management.

All of the features of the PROLINK system disclosed in the co-pending '295 and '905 patent applications, except for exclusive reliance on GPS technology for yardage measurement by the PROLINK system, are similarly incorporated in the ACUTRAK system. In addition, the ACUTRAK system has a unique guidance system in the form of a dead reckoning system that tracks the distance moved by and the orientation of the wheels, extrapolated to the heading or bearing of the golf cart (or other roving unit) in which a portion of the overall system is incorporated. The ACUTRAK system is impervious to and unaffected by obstructions, so long as the system has been calibrated at least once prior to or during play, using DGPS. Thus, instead of experiencing frequent out-of-service announcements on the cart monitor, the golfer is cognizant only of continuous, reliable operation of the ACUTRAK system.

---

[2] ACUTRAK is a trademark of Leading Edge Technologies, Inc. of Chandler, Arizona, the assignee of the invention disclosed in this patent specification.

## Brief Description of the Drawings

The above and still further objects, features, aspects and attendant advantages of the present invention will become apparent from a consideration of the following detailed description of the best mode presently contemplated for practicing the invention, with reference to a preferred embodiment and method, in conjunction with the accompanying drawings, in which:

FIGS. 1A, 1B, and 1C are, respectively, a simplified diagram of a portion of the PROLINK system in use on a golf course, a block diagram of the principal electronic components of a cart-based PROLINK computer unit of the system, and the visual display mounted on the interior of the roof of a cart for viewing by the occupants;

FIG. 2 is a simplified block diagram of the overall PROLINK system;

FIG. 3 is a more detailed block diagram of the course management system (CMS)/base station portion of the PROLINK system;

FIG. 4 is a block diagram of the electronic components of a base station PROLINK computer;

FIG. 5 is a block diagram of the base station computer software;

FIG. 6 is a graphical user interface (GUI) windows display on the CMS computer monitor;

FIG. 7 is a GUI windows display with pop-up message on the CMS computer monitor;

FIG. 8 is a simple block diagram of a robust golf navigation system to provide both distance measurements to aid improvement of the golfer's game, and position measurements to observe location of carts for course management;

FIG. 9 is a block diagram of a generalized dead reckoning navigation system using differential GPS (DGPS) calibration;

FIGS. 10A and 10B are front and side views illustrating the mechanical assembly employed to house the encoder and to attach it to the golf cart;

FIGS. 11A and 11B are top and side views of the compass assembly for the DR system of the invention;

FIG. 12 is a block diagram of a preferred embodiment of the invention, using a floated compass/front wheel sensor DR system implementation;

FIG. 13 is a simplified top view of a DR navigation system-equipped golf cart showing the front wheels angled in a turn, for use in explaining the embodiment of FIG. 12;

FIG. 14 is a block diagram, similar in many respects to that of FIG. 12, illustrating the implementation of a fixed compass/front wheel sensor alternative approach to the preferred DR system embodiment;

FIG. 15 is a block diagram illustrating the implementation of a dual front wheel sensor alternative approach to the preferred DR system embodiment;

FIG. 16 is a simplified top view of a DR navigation system-equipped golf cart showing the front wheels angled in a turn, for use in explaining the embodiment of FIG. 15;

FIG. 17 is a block diagram of the DR calibrator according to the invention;

FIG. 18 is a block diagram of the PROLINK system communication processing, as used in the ACUTRAK DR system of the invention;

FIG. 19 is a graphical diagram illustrating the system timing mechanization;

FIG. 20 is a simple diagram of the PROLINK variable length packet length network; and

FIG. 21 is a communications network packet timing diagram for the PROLINK system.

## Detailed Description of the Preferred Embodiment and Method

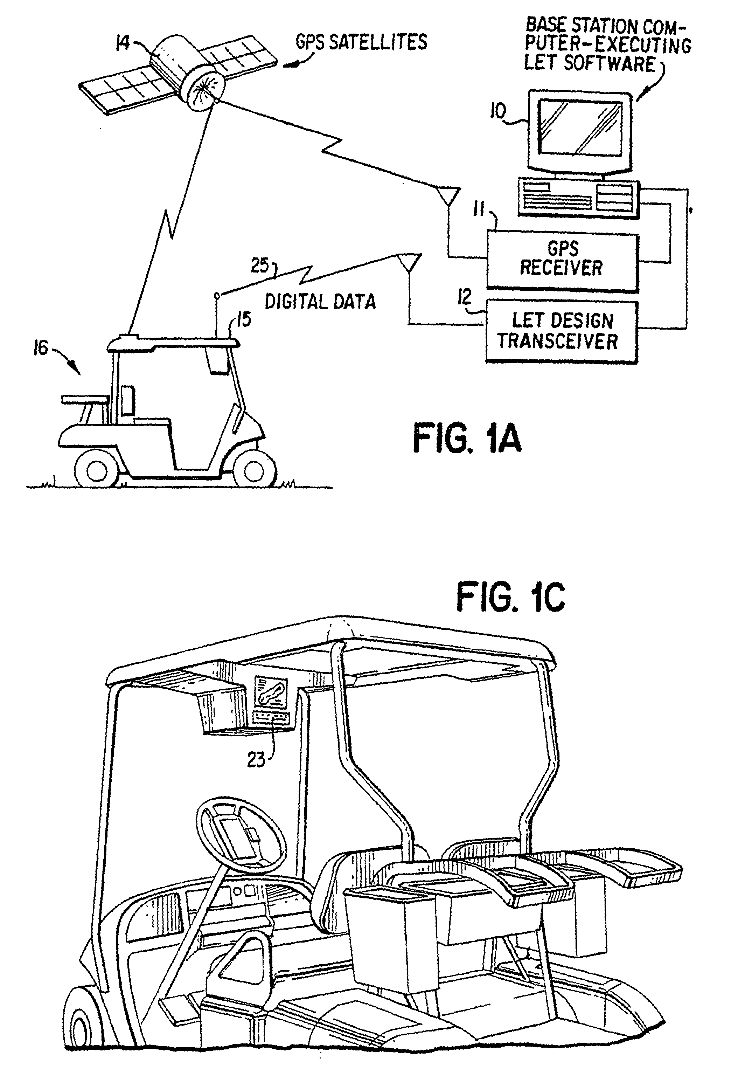

Although the specifications of the co-pending '295 and '905 patent applications are incorporated herein by reference, a brief description of the desired aspects and features of the PROLINK system will be presented for the sake of convenience to the reader. Referring to FIG. 1A, the PROLINK system includes a base station or course management station (CMS) 10 which may be located, for example, in the pro shop. CMS 10 includes a course management computer (CMC) with central processing unit (CPU) and video monitor, together with software for execution by the CMC. A GPS receiver 11 receives typical GPS data transmissions from all GPS satellites 14 in view, and a transceiver 12 provides two-way radio frequency (RF) communication with a multiplicity of cart-based mobile receivers, or roving units 16. The roving unit provides a high resolution display of the course hole in play (and the entire course, whenever desired by at-will selection) on a color monitor 19 (FIG. 1C), together with a display of distances from tee to cup (the terms "cup", "pin", and "flag" are intended herein to refer to the same point on the hole), and roving unit to cup and various course hazards, for that hole.

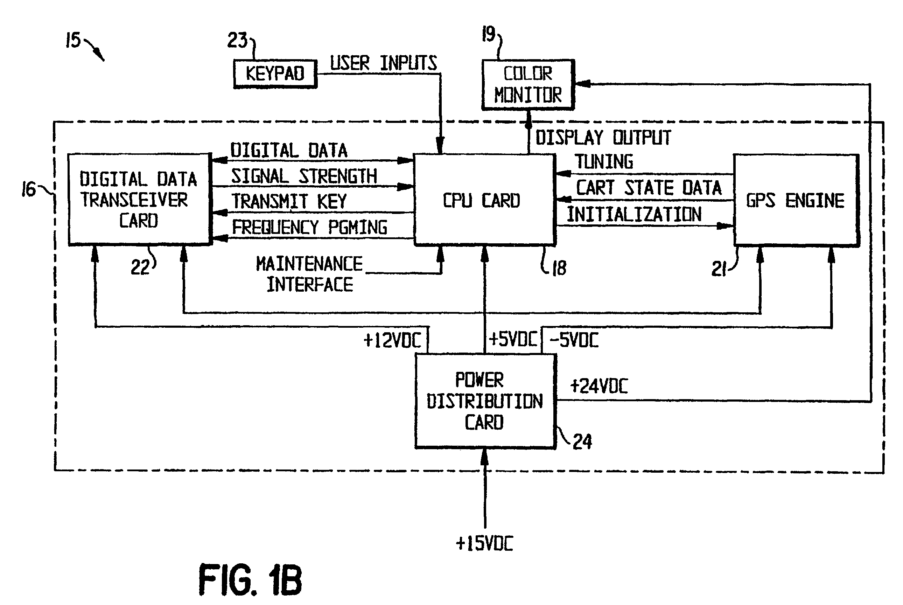

Referring to FIG. 1B, the cart-based unit (CBU) 15 includes PROLINK Computer Unit (PCU) 16 with CPU/ video card 18, GPS receiver 21, RF digital data transmitter/receiver (transceiver) card 22, and power distribution card 24. CBU 15 also the monitor 19 and a keypad 23 for selecting various PROLINK user options. Monitor 19 (FIG. 1C) is mounted at the underside of the roof 20 of cart 16, and is powered on (along with the other electronics in the cart-based unit) when the cart is checked out from the course cart shop. Except for commercial advertising or pro tips presented prior to play and between holes, the monitor displays -- as its normal (i.e., default) display, -- the layout of the hole being played. This display changes automatically when the cart reaches a predetermined distance from the tee boxes for the next hole to be played (between the cart shop and the predetermined distance to the first hole, an informational message, such as course tips, is displayed). However, the user may instead select another option for display at any time by operation of keypad **23** on a control panel mounted beneath the monitor in the cart roof.

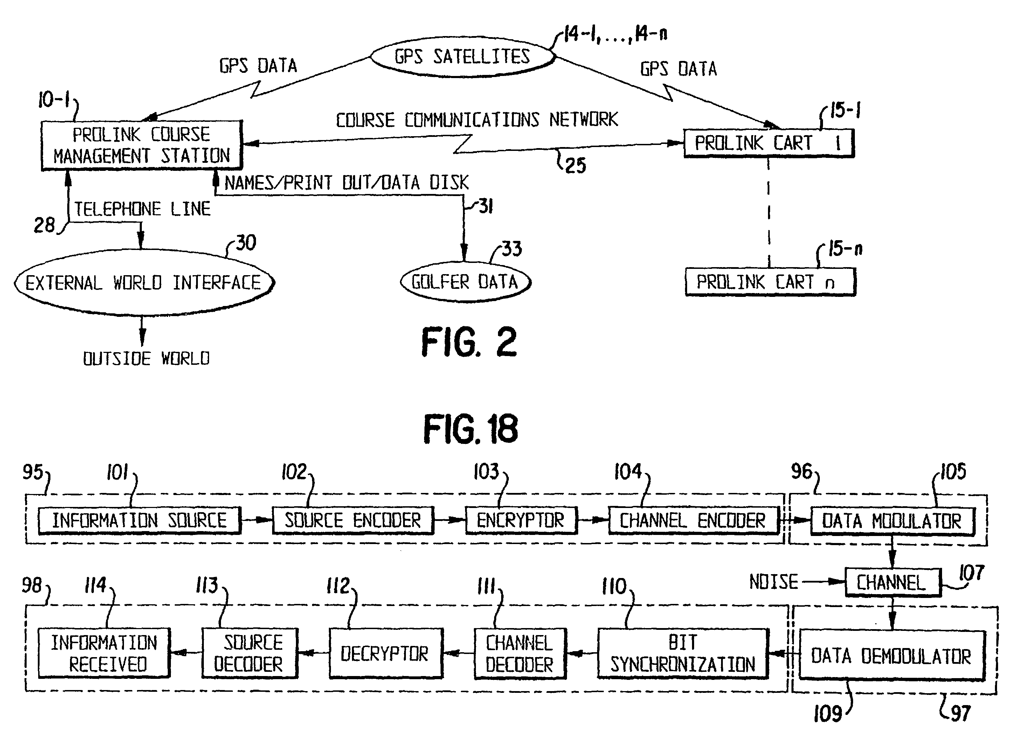

In the simplified block diagram of the overall PROLINK system of **FIG. 2**, GPS data transmitted by GPS satellites **14-1**, ..., **14-n** is received by CMS **10** and CBU's **15-1**, ..., **15-n**. An RF course communication network **25** established via the transceivers between CBS **10** and CBU's **15** serves for transmitting advertising, general information including pro tips, and system-wide and individual messages to carts from the base station, as well as DGPS corrections, and for transmitting messages from the carts to the base station. A telephone line **28** provides a data/voice/fax communication link between the base station (CMS) **10** and interface **30** to the outside world.

The golf carts provided with PROLINK system capability (not all carts used on the course need have this capability, in the unlikely event that a golfer chooses not to use a cart equipped with its helpful features) are garaged at a course cart shop. Through personal identification furnished by each golfer/renter t the cart attendant at the time of cart check-out, which is entered into the computer associated with CMS **10**, personal messages may be communicated to the golfers occupying that cart by CMS **10** at any time and any place on the course during their round of golf. When the cart is returned to the attendant, the data from the round, which is captured and stored in the cart-based computer memory may be transmitted to CMS **10** via transmission line **31** so that a print-out ("hard copy") or diskette may be generated in the clubhouse for pickup and replay by the golfer at any subsequent time.

The fixed base station/GPS receiver **11** of CMS **10** is located at a precise survey point, which may have been obtained by a standard land-based survey or satellite computed position from the GPS system. Similarly, the relative positions and distances between fixed course features, such as between tee boxes and cups (even though these locations may be changed daily by the course manager for holes with plural potential tee and/or cup locations), and between tees, cups, or other fixed points and hazards, as well as hole layout, are known surveyed points or boundaries for each hole which may be stored in the computer and called out for display at any time on the cart monitors without need for anything more. This information is supplied by CMS **10** to each CBU **15**. Network control data provides timing information for the base station/cart communications, messages, dynamic object status (such as pin placements and tee box locations), initialization message with time and position data to 'cold start' the CBU GPS receivers if required, and golfer identification and start times information for the course rangers. Information supplied by each CBU to the CMS includes the location of each golf cart by ID, message information from the golfers, pace of play data, and player score and statistical information for post-play output. The variable length communications network of the PROLINK system allows an almost unlimited number of CBU's to be supported by the system. The typical 18-hole course may utilize some 70 to 80 golf carts, which are easily accommodated by the PROLINK system.

The course management portion of the system performs various functions in addition to those mentioned thus far. For example, the high resolution color computer monitor at the base station displays the course map with all its features, and indicates the locations of the golf carts, refreshment carts, maintenance carts, and any other roving units, updated in real time as they move about the course. A zoom feature allows enlargement of any area of the map of interest, such as a particular hole or a number of contiguous holes. Pop-up windows may be activated by the CMS operator to execute actions such as a global message for distribution to the golf carts. Advertising and promotional messages, such as the lunch special, sports scores, identity of a golfer who has hit the day's longest drive, and personal messages may be transmitted to the carts from the base station. The CMS also provides overall system timing, and master control of the PROLINK system communications network.

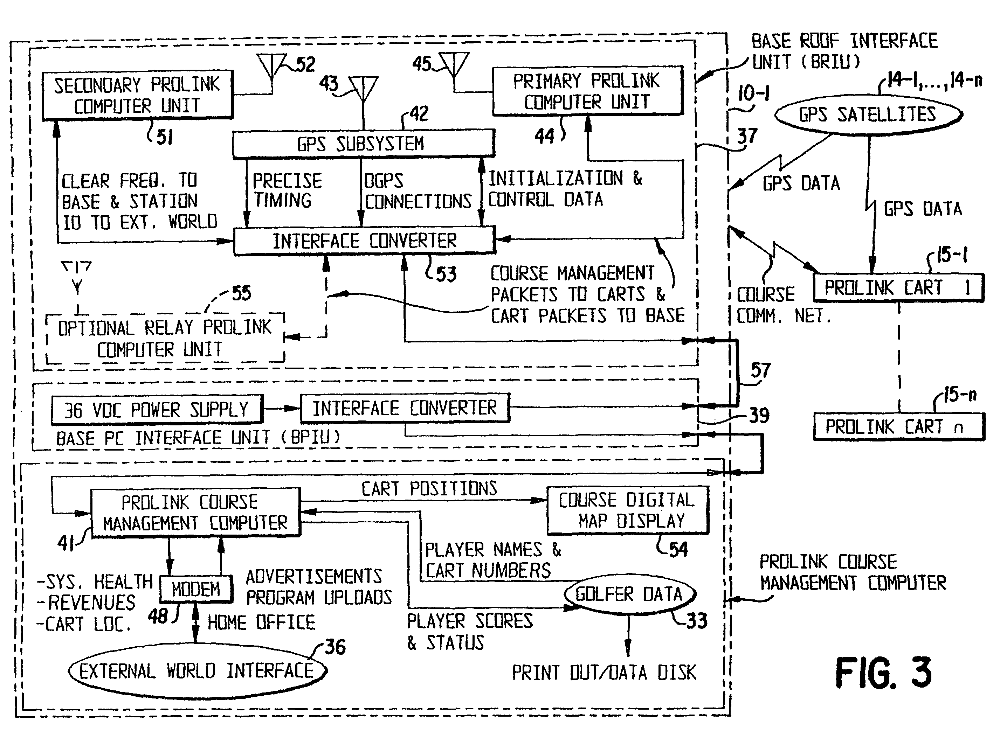

As shown in the block diagram of **FIG. 3**, the base station includes base roof interface unit (BRIU) **37**, base PC interface unit (BPIU) **39**, and CMC **41** which is the master control for entire PROLINK system. BRIU **37** is mounted on the roof of the structure in which CMS **10** is installed for the sake of improved transmission and reception. BPIU **39** provides an interface between BRIU **37** and CMC **41**, and converts RS-232 formatted data from CMC **41** to RS422 formatted differential data for BRIU **37**, and vice versa. The RS422 data is more robust for traversing relatively long distances through cable **57** to reach BRIU **37**, which may be located up to 4000 feet away from the CMC.

BRIU **37** includes GPS subsystem **42** with antenna **43**, primary PROLINK computer unit (PCU) **44** with antenna **45** for transmitting and receiving data packets to and from each cart, secondary PCU **51** with antenna **52** for monitoring frequencies and for broadcasting station identification, and interface converter **53** for an interface between BRIU **37** and CMC **41**. The BRIU may also include relay PCU **55** for a course with particularly harsh terrain that may prevent continuous line-of-sight communication, for better RF communication.

GPS subsystem **42** generates DGPS corrections using GPS signal data received from satellites **14-1**, ..., **14-n** in view, as differential pseudo range and pseudo range rate corrections for each visible GPS satellite with respect to the fixed survey point of the CMS base station location. The DGPS corrections are communicated to CMC **10** via BPIU **39**. The CMC creates a robust communication packet against bursty channel errors, and sends it via BPIU **39** to primary PCU **44** for subsequent transmission to CBU's **15-1**, ..., **15-n**.

GPS subsystem **42** also provides precise system timing to CMC **10**, primary PCU **44**, and secondary PCU **51** by means of a pulse per second (PPS) signal implemented as an interrupt to the computer, for system timing to near microsecond (ms) levels to precisely control RF communication via primary PCU **44**. A GPS time-tagged message from the GPS subsystem immediately following the particular PPS indicates the time of the occurrence of the PPS. In the unlikely event that the GPS subsystem is not properly initialized on power up, CMC **10** provides it with initial position, time, and date for proper satellite acquisition.

Primary PCU **44** transmits information to CBU's **15** under the command of CMC **10**, and sends data received from the carts to the CMC for processing and response. PCU **44** also converts the packetized serial data stream supplied by CMC **41** to binary FSK digital modulation for broadcast on the PROLINK system. Data received from the CBU's is likewise converted at unit **44** from FSK to a packetized serial bit stream for processing by CMC **41**.

For use of a strictly PROLINK system, it was proposed that if the golf course is hilly or has other obstructions to line-of-sight (LOS) communication between carts and the base station, it is possible to use RF reflectors, diffractors, or repeaters, including repeaters with directional antennas, in an effort to alleviate or reduce the problem. While such procedures are suitable for maintaining RF communications between mobile units, or between mobile units and a base station where obstructions are present, they are inadequate for overcoming loss of LOS communication with GPS satellites.

CMC **41** and video display monitor **54** are located in the pro shop for ease of real time monitoring of course play by the club pro (course administrator). The CMC collects statistics on average speed of play of golfers by individual or group for analysis of ways to speed up play or to identify course bottlenecks and other problems. Modem **48** allows this and other course utilization data and overall system operational data, including status of each CBU **15**, such as need for emergency repair following breakdown, to be downloaded from the computer. The modem also allows data to be loaded into the computer, such as advertising matter to be transmitted for display on each cart monitor; to allow a maintenance provider to call in for remote extraction of data concerning PROLINK system performance history; to allow new software upgrades to be loaded into the system; and to allow persons in other cities or at other locations to preview the course on which the PROLINK system is installed.

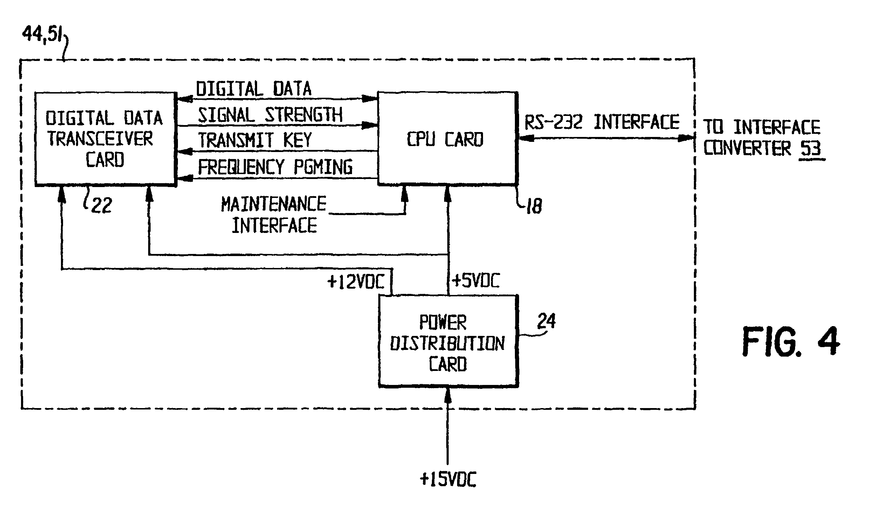

In **FIG. 4**, a block diagram illustrating components of primary PCU **44** and secondary PCU **51**, the two PCUs are each identical to cart-based PCU **16** (**FIG. 1B**) with the exception that the former PCUs lack GPS since both of them utilize GPS subsystem **42**. A CPU card **18** is coupled to GPS subsystem **42** via interface converter **53**.

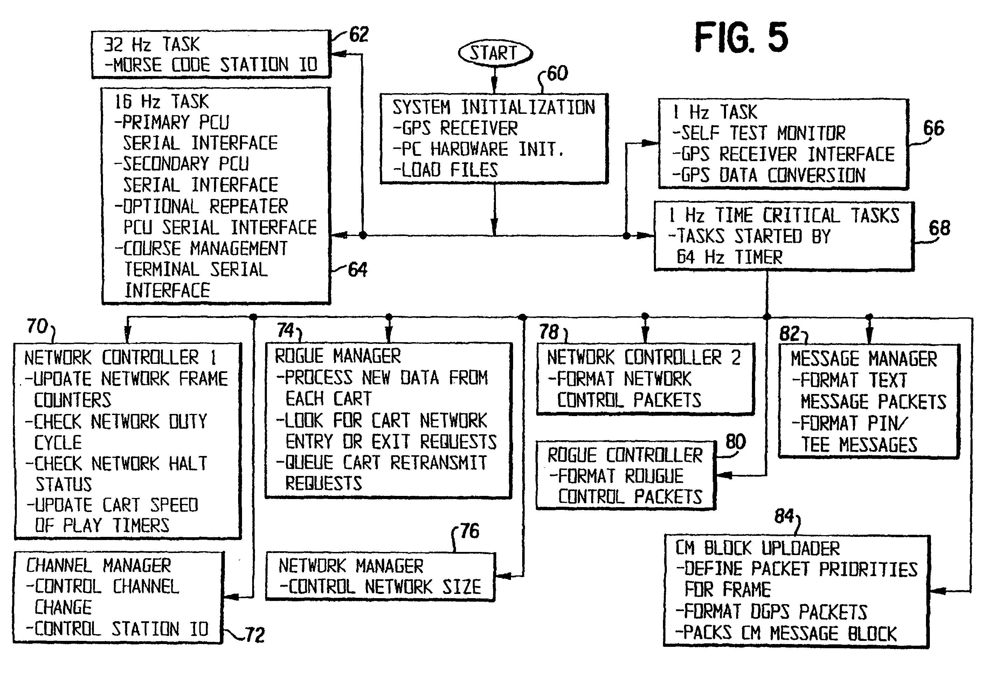

**FIG. 5** illustrates a top level description of the tasks performed by the CMC software as well as the rate at which each task needs to be performed. At both the cart and the base station sides, a real time operating system takes inputs from a user and automatic inputs from external sources, and responds accordingly. Before execution, system initialization **60** is performed to set up the CMC video environment and the communication ports, and to bring up the communication network by which the CMC talks to all carts on the golf course. System initialization **60** also initializes a GPS receiver with its position and time, polls primary and secondary PCUs in the base roof interface unit and loads data files such as course maps and information containing the number of golf carts that are in the system.

On completion of system initialization, additional tasks include a 32-hertz (Hz) task **62** which transmits Morse code data to enable secondary PCU **51** to broadcast station identification on the RF communication channel on which CMS **10** is currently operating; a 16-Hz task **64** that sends and receives data from various devices on the system such as the primary and secondary PCUs. GPS receiver data is checked during the 16 Hz task to see if any new data has been received. A 1-Hz task **66** of self-test monitor checks whether all components of the PROLINK system are functioning properly, and decodes new messages received from the GPS receiver and performs GPS data conversion, these tasks to be performed within a one second time interval. 1-Hz task **68**, however, includes subtasks such as **70** to keep track of network timing by updating frame counters, determining presence of carts on the course, and updating speed of play timers for those carts; **72** to determine necessity for channel changes; **74** to manage carts on the course; **78** to control the size of the variable length network by lengthening or shortening the length based on number of carts on the course; **80** to create cart control packets based on the results of subtask **74**, for transmission to each cart; **82** to determine whether certain messages have been entered for transmission to the carts, and to format such messages as time and space on the network permit; **84** to assemble all data packets created by subtasks **78, 80,** and **82**, for communication to the carts. System software also uses a windowed graphical user interface tailored for real-time operation with little CPU throughput.

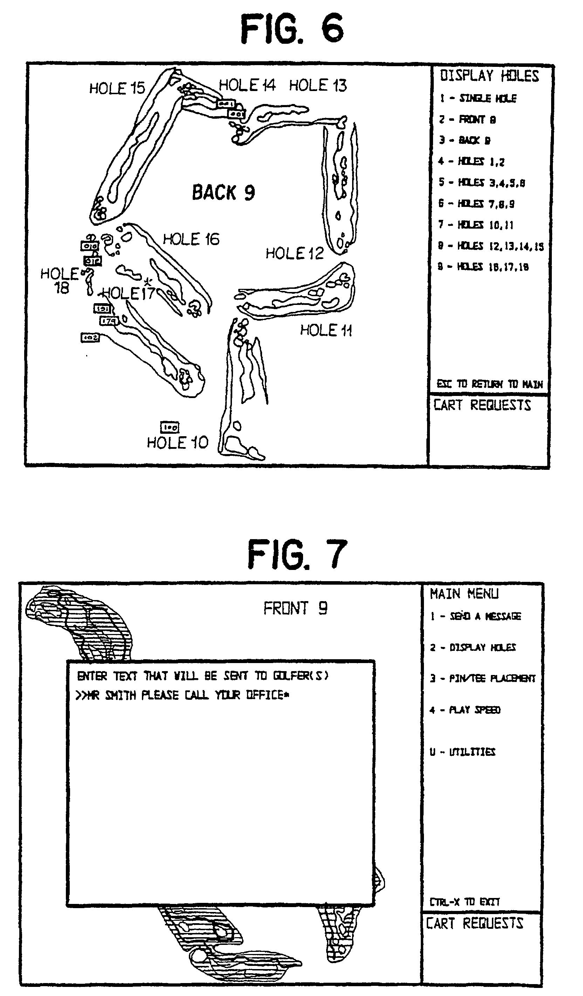

**FIG. 6** illustrates a typical image appearing on course management display **54**, with main window including layout of the entire course or selected group of holes, showing specific location of each cart on the course by an icon (e.g., **90**). The CMC correlates cart location and particular hole, which makes it important that the hole has been precisely surveyed. In the PROLINK system, the coordinates of the cart are determined in latitude, longitude and altitude and converted to a two-dimensional X-Y reference frame, which enables the course manager to observe or be signaled, for example, whether a cart has entered a restricted area of the course, or if a particular cart's play is too slow. The right side of the **FIG. 6** image shows a menu of options for the user/operator, including a change of the holes being displayed, or sending a message to a cart, or receipt of a message (lower right corner).

In **FIG. 7**, the CMC's graphical user interface (GUI) displays the front nine holes of the course, with a pop-up window that displays a message to a golfer in the cart to call her office. The CMC software allows the course manager to send messages from the CMC globally to all carts on the course, or privately to a particular cart.

The present invention provides various improvements over the golf navigation systems described in the '295 and '905 applications, principal among which is the use of dead reckoning (DR) navigation rather than GPS techniques to ascertain yardage measurements from the DR-equipped golf carts on the course to various course features of interest, including the cup and hazards pertaining to each hole being played, with periodic DGPS calibration of each cart to re-key the cart to a fixed survey datum or reference point. Many features of the PROLINK system pertaining to communications between base station and carts or between the carts themselves, display considerations including location of apparatus such as monitor and keyboard on the cart, course mapping, course management and administration capabilities, and others, are retained, at least in significant part, in the ACUTRAK golf measurement and management system.

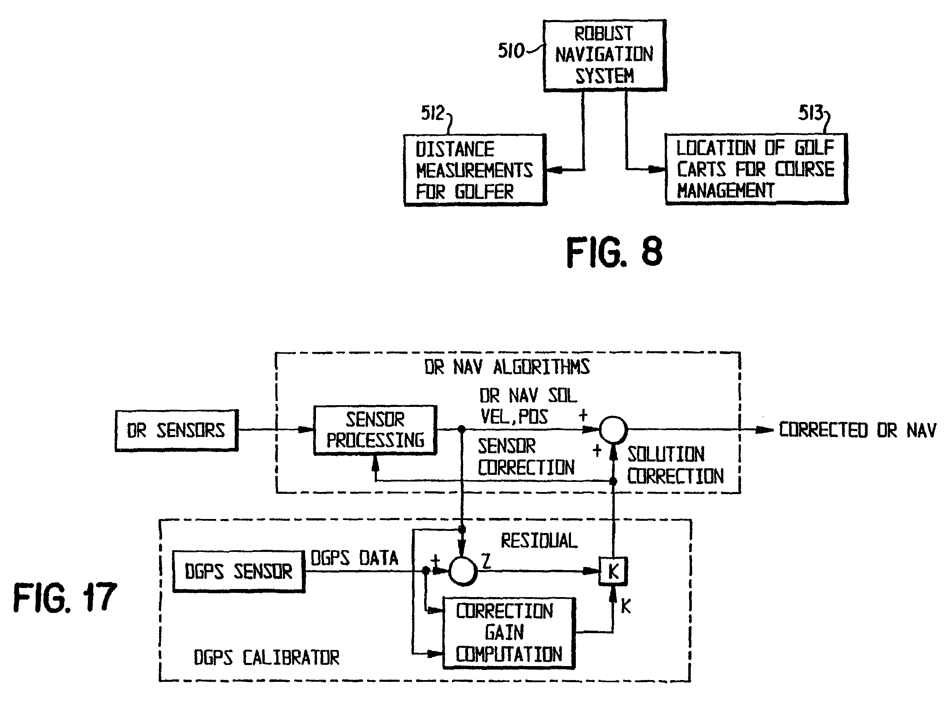

As illustrated by the block diagram of **FIG. 8**, a robust golf navigation system **510** is an essential element to generating reliable information from which to provide both distance measurements **512** to aid improvement of the golfer's game, and position measurements **513** to observe location of carts for course management. By robust is meant that the system of the present invention (the ACUTRAK system) provides accurate yardage measurements over a wider range of operating conditions, such as under tree canopies or on courses with extensive hills, than prior art systems in general and systems using GPS for such measurements in particular. The term "robust" is often used in control systems and navigation arts to describe systems that are more apt to provide a reasonable output or result under a wide range of input conditions. According to the present invention, the robust golf navigation system includes a dead reckoning navigation system.

The terminology "dead reckoning navigation system" is commonly defined in the navigation arts as a navigation system which, upon being initialized with the starting position, velocity, and sometimes attitude of the host vehicle, keeps track in the change in motion of the vehicle from the initial starting state. An example of a significant component of a cost effective dead reckoning navigation device for use on a golf cart on a golf course is a wheel rotation sensor. The sensor can measure the number of rotations of the wheel since initialization to determine the distance traveled from the initialized starting point. However, distance is merely scalar. For such information to be useful in a golf course application, the direction(s) in which each part of the distance was traveled must be known. In the horizontal plane, for example, this can be achieved by use of an inexpensive compass sensor to determine magnetic heading.

The advantage of a dead reckoning system is that it can provide extremely high bandwidth information (i.e., information at rates of hundreds of times per second). Additionally, wheel rotation translating into linear motion of a fraction of an inch can be achieved impelling a physical limit of measuring yardage to a fraction of an inch at any sample instant, whereas the typical cost effective satellite navigation system operated in differential modes can only provide measurements at once per second to an accuracy of ±5 meters on any single sample. Furthermore, a dead reckoning system is not susceptible to masking that can render a satellite navigation system unable to provide any yardage estimate at all. The limitation of the dead reckoning systems is that several sources of error exist in them which can allow errors to grow significantly over time.

In the example of a wheel sensor for measuring distance, and a compass for measuring bearing or heading, such errors include wheel scale factor (SF), magnetic heading variation error, sensor noise, and wheel spin, completely apart from any potential compass-based errors. For example, if the tire pressure allows the wheel diameter to vary, then the distance traveled as measured by the system will be in error proportional to the error in the tire diameter. Therefore a method to estimate the errors and apply corrections is required for any level of yardage accuracy to be achieved with the dead reckoning system.

The present invention uses a satellite navigation system to calibrate the errors in the dead reckoning navigation system. The benefit of this arrangement is that calibration of the dead reckoning navigation system is performed when satellite coverage is optimal. Under conditions in which satellite coverage is not optimal, or is simply not available, the dead reckoning system, having been previously calibrated, continues to perform well and to provide high accuracy yardage information to the golfer. Importantly, no input from the golfer is required for dead reckoning system calibration.

While many dead reckoning implementations are possible, the preferred approach for golf course application involves the use of a single front wheel sensor to measure distance and a floated sensor compass for measuring direction. For this application, only speed and direction information in the horizontal plane are required. Other viable alternatives to the preferred approach exist, however, and include use of (i) dual front wheel sensors detecting the wheel rotation for measuring distance, and measuring the difference between the wheel rotations for determining the angular rate; or (ii) a fixed sensor compass for detecting direction, a terrain database for slope locations, and a single front wheel sensor for measuring distance. Alternative (i) is cost effective and demonstrated reasonable performance in simulations. Dual front wheel sensors can pose a problem, however, because the front wheels of the cart can turn to become misaligned with the longitudinal axis of the cart. Of course, this is required in order for the cart to be made to turn, but it can cause navigation performance problems. Alternative (ii) is also achievable, although the need for a sophisticated terrain database, which is used to determine the severity of the slope at any particular location on the golf course, reduces the desirability of that approach.

Some other dead reckoning system implementation approaches which were considered but discarded before selecting the aforementioned preferred approach are as follows. A rate gyro for determining angular rate and a single front wheel sensor for measuring distance provide very good navigation performance in a golf course environment, but the cost of a rate gyro with reasonable performance and reliability is prohibitive. An approach using a steering angle sensor for determining delta direction and a single front wheel sensor for measuring distance proved to be technically inadequate because an aging golf cart tends to gain considerable "play" or looseness in its steering linkages, which makes steering angle sensing unreliable. Adding to this problem is the fact that the divergence in position owing to a steering angle detection error is non-linear and grows quickly with distance traveled.

Still another discarded approach employs a fixed sensor compass for determining direction and a single front wheel sensor for measuring distance. This scheme is unreliable on slopes exceeding three degrees, which are quite common on golf courses. Fixed sensor compasses are tilted with respect to the Earth's magnetic field when the cart is being driven on a slope. The tilt results in an error in the measurement of heading when compared to maintaining the compass sensor level. In contrast, a floated sensor compass (which is used in the preferred approach) floats the sensor in a liquid bath which maintains the magnetic field sensor level under the influence of gravity even if the cart is on a slope. Yet another approach would use dual rear wheel sensors to detect the wheel rotation for measuring distance, and measuring the difference between the wheel rotations for determining the angular rate. Although similar to one of the viable approaches mentioned above, this configuration is undesirable for a golf application because golf carts employ rear wheel drive, and either rear wheel may lose traction from accelerating or braking. Rotation of both rear wheels must be sensed to detect wheel spin conditions, but the reliability of this scheme is questionable.

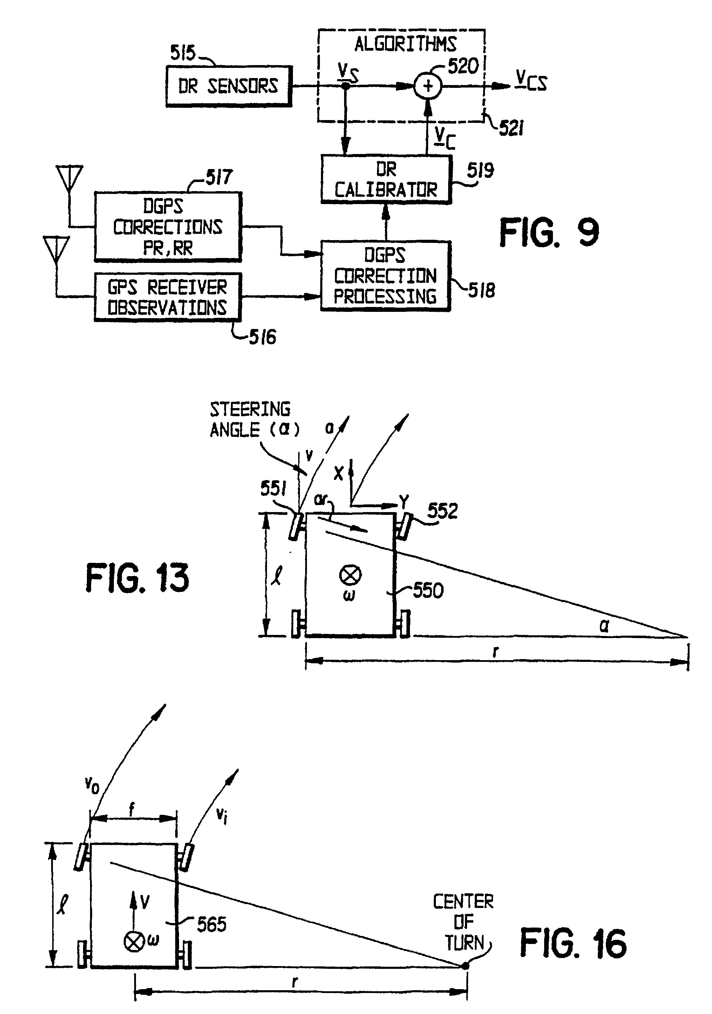

Reference is now made to **FIG. 9** which is a block diagram for a generalized dead reckoning navigator using differential GPS (DGPS) calibration. Dead reckoning sensors **515** provide a golf cart state vector, which will be corrupted by errors that tend to grow with time and/or distance. A GPS receiver **516** provides observations of the pseudo-range and range rate to each GPS satellite which is available (i.e., in line-of-sight (LOS) view, and thus not masked). These observations are corrupted by the previously mentioned governmental introduction of selective availability errors, as well as by other error sources, but can be corrected to an appropriate extent by use of a digital radio system which receives DGPS corrections of pseudo-range and range rate at **517** for each GPS satellite in LOS view as observed by a remote GPS receiver (not shown) located at a fixed point within radio range. These corrections are processed by conventional DGPS correction processing **518** to obtain more accurate observations of the golf cart pseudo-range and range rate to each GPS satellite in LOS view from the respective cart.

Dead reckoning (DR) calibrator **519** compares the DR navigation data in the form of state vector $\underline{V}_S$ from sensors **515** to the DGPS corrections obtained from processor **518** to compute DR calibration corrections. The latter corrections are then added in the form of a corrected vector $\underline{V}_C$ to the DR navigation solution at **520** within algorithm section **521** to provide a highly accurate and robust corrected golf cart state vector $\underline{V}_{CS}$.

If GPS alone is used to provide the golf cart state vector, at least some GPS satellite information will be blocked from being received by the cart receiver, at most courses, because of the terrain or trees. At any time that less than four GPS satellites are available for measurements, the GPS receiver is no longer able to provide a high accuracy state vector. Moreover, if the GPS satellites that are visible are all present in the same general location in the sky, as is often the case when tree or terrain masking occur, the accuracy may be severely degraded even if line-of-sight viewing is available to at least four satellites -- because of the poor triangulation geometry (referred to as dilution of precision). On the other hand, if the golf cart were to use only a dead reckoning navigation system, the cart state vector errors would grow unbounded throughout the round of play. In such a case, the cart position error could be too severe for meaningful use of the system after only the first hole of play.

The approach presented by the present invention is virtually immune to such problems. The DR system is the golf cart navigator, used to determine distance (yardage) measurements as well as heading, whereas DGPS information is only used to calibrate the DR errors in real time so that each cart is periodically calibrated and recalibrated to survey points during play. After a calibration, accumulated DR errors will have been reduced substantially, thereby allowing continued high accuracy navigation even if DGPS were completely unavailable at any time thereafter during play of the hole, because of terrain or tree problems. It is desirable, however, that the DGPS calibration be repeated within an interval of play extending about 500 yards from the last calibration.

Once the DR system is calibrated or recalibrated with DGPS, the wheel scale factor (SF) and compass misalignment errors are again very small compared to the uncalibrated nominal errors. However, they cannot be completely eliminated, because of outdoor temperature changes, cart tires heating up, and tilt effects on the compass (to be discussed below). Therefore, after calibration, the DR errors are not eliminated, but they grow much more slowly than they would if there were no calibration. A single calibration is effective to maintain accuracy of within approximately two yards on distance measurements for the yardage traversed on about a par 5 golf hole, which is a distance of about 500 yards. This is generally not a problem, because at some point on every fairway from tee box to green at least minimal LOS is available so that calibration can be performed, and it is performed automatically. This is quite different from the situation for a system that relies wholly on GPS, because any obstructions encountered by a golf cart using that type of system will result in immediate "out of service" indication. Indeed, even on the recognized best system employing GPS, about 900 DGPS measurements are required to be made on a single par 5 hole, or about one measurement in each second of play, contrasted with but a single DGPS calibration approximately each hole for the ACUTRAK system. Thus, a course would have to be virtually totally blocked by trees or hilly terrain that prevented DGPS calibration or recalibration somewhere on each hole or so to cause a similar removal from service with a system of the present invention. That extent of blockage, of course, is so unlikely as to be completely nil.

It should further be noted that the distance which may be traveled with the DR navigation system according to the general principles of the present invention, while still maintaining a high accuracy of distance measurement -- such as two yards --, is simply a function of the precision and sophistication (and, hence, the cost) of the sensors. An entire round of golf, i.e., eighteen holes, could be played without more than a single initial DGPS calibration while staying within that level of yardage measurement accuracy if the DR sensors are of a suitable level of excellence. Clearly, however, a compromise must be reached between the precision and accuracy of the product and the cost of purchasing and using it. The preferred embodiment of the invention represents a system and method capable of providing high accuracy of measurement in a golf application with DR sensors whose cost will not make its use prohibitive to course owners or players.

Further, the invention does not use GPS in the traditional way. Only GPS raw pseudo-range and range rate measurements are used to calibrate the DR system. The GPS navigation system employed by others for numerous applications including the golf course environment is not used in the system of the present invention. Hence, calibration of DR errors can be performed even if fewer than four GPS satellites are in LOS view to the golf cart. In fact, measurements obtained from only one GPS satellite can provide sufficient information from which to calibrate dead reckoning errors. Hence, the level of minimal GPS information required as being reliable for other systems is not a factor in achieving very accurate DR navigation performance.

DGPS techniques known as the "method one" approach according to Blackwell (see the reference cited earlier herein) are used in the preferred embodiment of the invention to provide pseudo-range and range rate corrections for the GPS pseudo-range and range rate measurements. In contrast, DGPS usage in prior art golf yardage measurement applications such as are disclosed in the Huston '093 patent and Bianco '518 patent is confined to the inferior "method two" approach, in addition to other deficiencies, to the extent understood from those disclosures.

In the "method one" approach, the base station measures the error between the estimated base station pseudo range to the GPS satellite (based on the known location of the base station GPS antenna) and measured GPS receiver pseudo range to the GPS satellite. Errors in the range rate are also measured. These raw measurement errors are computed for each satellite that is in view of the base station antenna. The errors are then broadcast to the roving units so that the roving unit GPS receivers can subtract each satellite pseudo range error from each satellite pseudo range measurement. Since the base station has broadcast measurements from each satellite in view, the roving unit need only apply the corrections to the subset of GPS satellites that it is tracking at that particular time. The roving unit GPS receiver then uses the corrected pseudo range measurements for the satellites in its view to compute the position, velocity, time (PVT) solution that is provided to the user for navigation. PVT itself (as opposed to this PVT solution using the "method one" approach) represents the standard output of a GPS receiver that most users use.

In contrast, in the "method two" approach, the base station measures the position error between the known base station GPS antenna position (latitude, longitude, and altitude) and the GPS receiver computed position (latitude, longitude, and altitude) to compute a correction in north and east position. That correction is broadcast to all roving units on the system. However, since the roving unit could be looking at any subset of the total number and arrangement of GPS satellites that the base station is seeing, the base station must broadcast a north and east position correction for each and every possible combination of satellites. This follows because the correction is unique to the specific satellites that the roving unit is tracking. The roving unit then selects the north and east position corrections corresponding to the set of satellites it is tracking, and applies these corrections to the GPS receiver latitude, longitude, and altitude output.

The most serious problem suffered as a result of use of the method two DGPS approach is the requirement of substantially greater communications bandwidth to provide the DGPS correction information than with method one. Method one also provides a "cleaner" solution which allows greater flexibility in selecting filtering algorithms to be employed for enhanced performance. Industry standard RTCM-104 was created to encourage and take advantage of the more efficient method one approach.

In the preferred embodiment of the present invention, a floated sensor compass and a single front wheel sensor are used for the DR navigation system of the cart, and method one DGPS techniques as defined by Blackwell are used for calibrating the system. This system is found to provide extremely accurate cart position determination under a wide range of operating conditions that can be expected on a golf course. In turn, this assures extremely accurate yardage calculations of range from the golf ball to the cup or to various hazards on the hole (or to anything on the entire course which has been included in the survey or whose position is determined from the system of the invention), when the cart is positioned close to the ball; and extremely accurate information on location of each system-equipped cart on the course to assist course management in efficient operation of the course.

Two mechanical issues are addressed in the implementation of sensors of the ACUTRAK system on a golf cart. First, consideration is given to the selection and mounting of the wheel sensor to be used for measuring distance traversed by the cart. Second, consideration is given to the selection and mounting of the electronic compass to be used for measuring bearing (direction, relative to a reference direction, typically true north).

The first consideration for selection of a wheel sensor involves determining the appropriate wheel on the golf can for mounting the sensor. The rear wheels of the cart undergo frequent slippage on a golf course owing to rapid acceleration and braking on wet grass. Hence, mounting of the sensor on a rear wheel would likely result in an inadequate and incorrect determination of the distance traveled by the cart under those conditions. This would appear to make a front wheel the clear choice for mounting the wheel sensor, particularly since the front wheels have no brakes and are not driven by the motor of the cart. But the front wheels can turn, and consequently the wheel velocity is computed along the direction that the wheel is pointed and not along the direction that the golf cart frame is pointed at any given instant. This problem is overcome mathematically in navigation software for the ACUTRAK system.

The second consideration is the need to determine a proper sensor for detecting wheel rotation. Hall effect sensors detect the presence of magnetic fields and are sufficiently rugged to withstand outdoor extremes of temperature, moisture, and soil contamination. But Hall effect sensors are limited in the capability to minimize quantization, i.e., capability to sense fine movements of the wheel as it rotates, for higher resolution. In contrast, optical sensors are capable of sensing extremely fine movements, to resolutions of the order of fractions of a degree of wheel rotation; but are generally not very robust in an outdoor environment, and are more expensive than magnetic sensors. The preferred embodiment of the system of the present invention utilizes a wheel sensor the selection of which takes into account those factors and also factors relating to the selection of a compass sensor for measuring bearing

In a dead reckoning system in which a floated compass is used in conjunction with a wheel sensor mounted on one front wheel, as in the ACUTRAK system, and with the special acceleration compensation algorithm (referred to below as the "compass tilt estimation" algorithm) for the floated compass used in the system, it is desirable for wheel rotation resolution to be at least 64 counts per wheel revolution, i.e., to possess the capability to detect at least every 5.625 degrees of revolution. A floated compass has a sensor which is floated in a liquid bath and which uses the Earth's gravity to keep the sensor level with respect to the gravity field, thereby resulting in the compass sensor remaining fixed with respect to the earth's magnetic field. Thus, a floated compass enables accurate measurement of magnetic heading even when the golf cart is tilted on a hill.

But a floated compass is responsive to acceleration of the golf cart (e.g., starting, braking, or turning) such that the sensor is artificially tilted throughout an acceleration event, and as long as such an event persists a significant loss of accuracy is experienced in measurements performed by the system. Compensation for compass errors during an acceleration event is achieved in the system of the present invention by virtue of (I) the high resolution wheel sensing to at least 64 counts per revolution, and (ii) the acceleration compensation algorithm which is run in the navigation computer and responsive to observation of such an event, and which was developed specifically according to the invention to predict the effect of the induced tilt on the compass heading output.

If a dual front wheel sensor configuration were used, an even greater resolution is required. A minimum resolution of 720 counts per revolution (equating to a capability to detect at least every 0.5 degrees of revolution), is required because the mathematical algorithms developed for the dual front wheel application are extremely sensitive to wheel quantization for accurate dead reckoning performance.

All of these factors considered, the preferred embodiment employs a wheel sensor in the form of a standard optical encoder (Model No. ENSID-TBA-M001Z8) manufactured by Bourns, Inc. of Riverside, California. Special modifications implemented to enable the wheel sensor to survive in the hostile outdoor environment include encapsulating the case of the sensor in an epoxy compound to seal the encoder itself against penetration or fouling by water or soil, and by using a sealed bearing on the encoder shaft rather than the standard bearing supplied with the unit, for that same purpose, i.e., to seal the encoder shaft against water and soil. The selected wheel sensor (Bourns optical encoder) has an effective resolution of 1024 counts per revolution, and is capable of 200 million rotations without failure. This is quite sufficient resolution to allow use of the floated compass and either a single front wheel sensor configuration or a dual front wheel sensor configuration dead reckoning system.

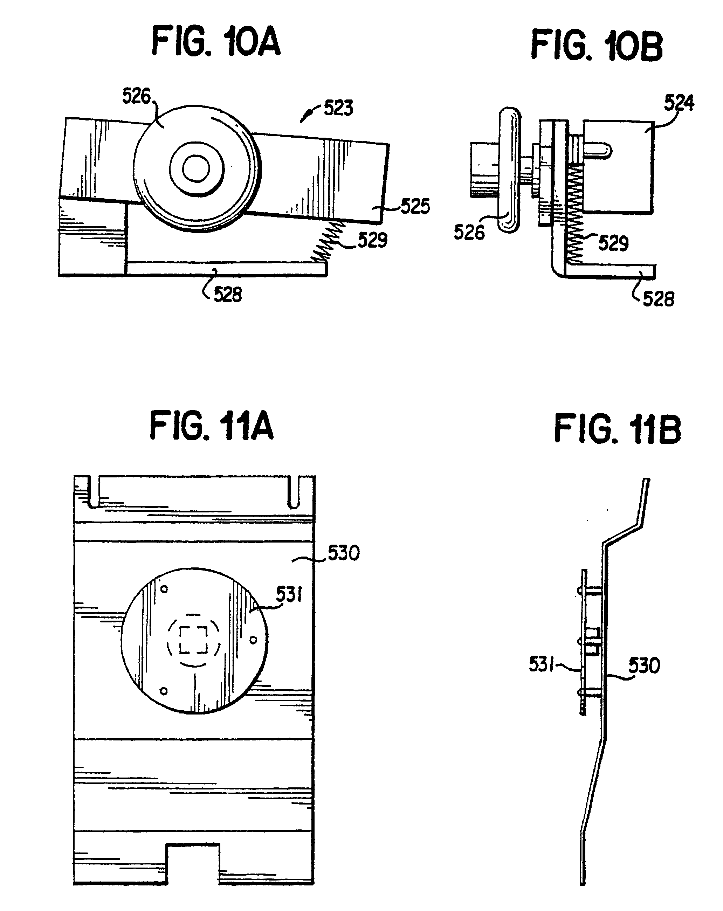

Referring to **FIGS. 10A** and **10B**, which are front and side views illustrating the mechanical assembly **523** employed to house the encoder and to attach it to the golf cart, the encoder **524** is secured to a frame or mount **525** and is attached via the frame for cooperation with a friction wheel (encoder wheel) **526** with rubber tread. A U-bolt (not shown) clamps around the front wheel axle (not shown in these Figures) via another mount **528** to support the encoder mechanical assembly. Encoder friction wheel **526** makes frictional contact with the golf cart front wheel hub (not shown in these Figures). Accordingly, as the front wheel of the golf cart rotates, the encoder wheel rotates as a consequence of friction with the wheel hub. The encoder assembly is spring loaded at **529** against the golf cart wheel hub to ensure full contact even if the hub is not true. The encoder wheel is one-half the diameter of the golf cart wheel hub, which makes each revolution of the golf cart wheel hub equal to two revolutions of the encoder wheel.

The floated compass sensor of the preferred embodiment of the system is a Model No. C-80 manufactured by KVH Industries of Middletown, Rhode Island. This sensor provides measurements of the magnetic heading accurate to one degree. The compass sensor is mounted inside the system roof assembly on the left (driver) front side so that the compass is virtually directly above the top of the left front wheel of the golf cart. This mounting location is important to minimize lever arm effects between the wheel sensor and the compass, especially when acceleration compensation is used. Another important factor in selecting the location of the compass is that it should not be in close proximity to ferrous metals, because such metals have the effect of distorting the magnetic field and, thus, the direction of true north, which can cause significant degradation of the accuracy of the compass readings.

**FIGS. 11A** and **11B** are top and side views of the compass assembly for the ACUTRAK system of the invention, illustrating the mounting of the compass on a bracket which is itself to be mounted in the system roof assembly for the golf cart. The compass bracket **530** is composed of aluminum (avoiding the use of a ferrous metal) which is in the form of a plate having bends to cause it to be angled in a manner that assures an optimum mounting of the bracket in the ACUTRAK system roof assembly, while maintaining the compass sensor **531** in a generally level position when the roof assembly with bracket **530** is fully mounted to the golf cart. The compass mounts to the bracket over a small circular hole that accommodates a protruding magnetic sensor on the compass circuit card.

Floated or pendulum mounted compasses are used to maintain the compass sensor at a level orientation when the vehicle is on a grade. Unfortunately, however, pendulums cannot differentiate vehicle acceleration forces from gravitational forces. Hence, vehicle turns, acceleration, and braking will cause the compass to tilt out of the horizontal plane and introduce heading errors into the system.[3]

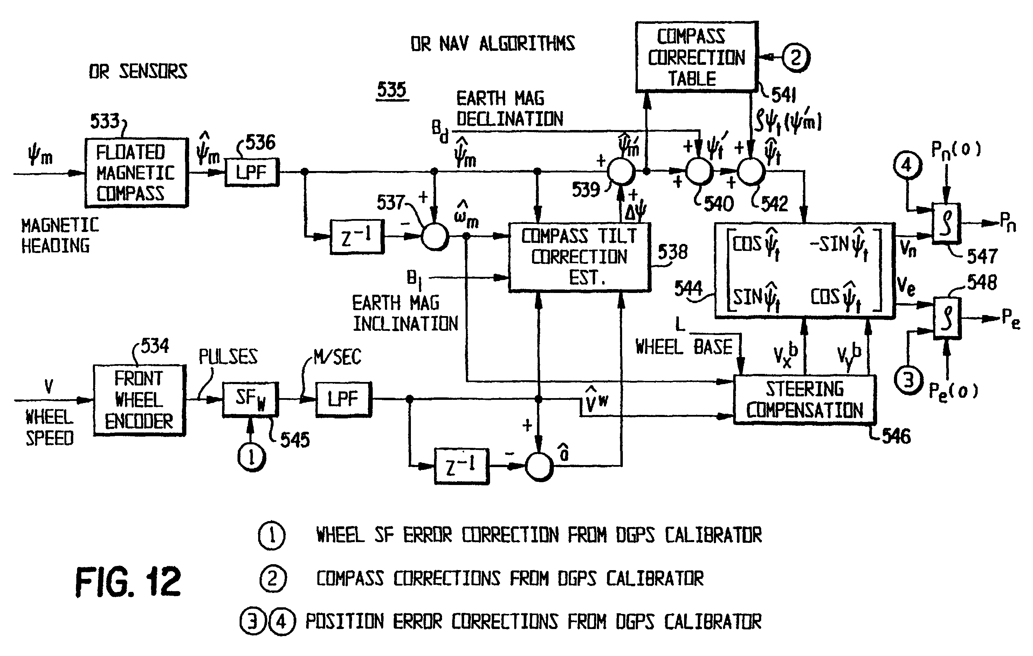

According to a feature of the invention, a compass tilt estimate or prediction of the effect of acceleration on a floated compass sensor to induce tilt, and its effect on the compass heading output, is calculated from data obtained from the compass and the wheel sensor, and this estimate is then used to compensate for tilt errors. A floated compass/front wheel sensor ACUTRAK system is shown in block diagrammatic form in **FIG. 12.** The DR sensors in this system are floated magnetic compass **533** and front wheel encoder **534**. The outputs of both sensors ($\psi_m$ for **533** and a pulse stream indicative of wheel speed for **534**) are delivered to DR navigation algorithms section **535** following initial processing. Output $\psi_m$ is subjected to low pass filtering at **536**, and the filtered information derived from the compass sensor output is applied, together with a factor $\omega_m$, involving rate of change of heading derived at **537** from the filtered output (which is added) and from a factor which is an inverse of the residual measurement ($Z^{-1}$, which is subtracted), a factor $\beta_i$ representing the Earth's magnetic inclination, and inputs derived in similar fashion from the processed output of wheel sensor encoder **534**, relating to wheel speed $V^w$ and wheel acceleration $\alpha$, to develop a compass tilt estimate or prediction correction factor $\Delta\psi$ at **538**. This compass tilt estimate correction factor is then applied at **539** to the processed output from the compass sensor **533** to compensate for tilt error.

The resulting data is applied to a compass correction table at **541** and is also added to a factor $\beta_d$ representing the Earth's magnetic declination at **540**. The compass correction table (a lookup table) also receives as an input the compass corrections from the DGPS/DR calibrator **519** (**FIG. 9**, referred to here by both terms DGPS and DR because the system utilizes the differential GPS calibration to restore the accuracy of the dead reckoning navigation system). The table **541** correction $\delta\psi_t$, is added to the output of **540** at **542** and the result is applied to a table calculator **544** along with information derived from the wheel sensor encoder output processing path.

In the latter path, the output of encoder **534** is subjected to application of a wheel scale factor error correction $Sf_w$ from DGPS/DR calibrator **519** at **545**, reflecting compensation of an error that increases with distance traveled over time. The resulting output undergoes processing similar to that provided in the compass sensor path, as described above, so that the pair of outputs related to wheel speed and acceleration are obtained and applied to develop the compass tilt estimation at **538**, while the wheel speed factor is also applied to provide steering compensation at **546**. Also applied to the latter are the turn rate (rate of change of heading ) factor $\omega_m$ and a factor representing the wheel base of the cart, from which speed (velocity) compensation factors $V_x$ and $V_y$ are derived for application to table calculator **544.**

The north and east wheel speed outputs of **544** are integrated at **547, 548** with position error correction factors from the DGPS/DR calibrator, and referenced to initial north and east positions $P_n(0)$ and $P_e(0)$ of the cart, to generate corrected north and east position information $P_n$ and $P_e$, respectively. By virtue of the foregoing algorithm, tilt errors from the floated compass arising from acceleration in a golf cart equipped with the preferred embodiment of a floated compass/front wheel sensor DR system are compensated for with each calibration of the cart-based system. The meanings attached to the symbols shown in **FIG. 12** and related calculations or computations are elaborated on below.

Acceleration in the vehicle (i.e., golf cart) body frame **550** may be computed as follows (with reference to **FIG.**

[3]L.A. Whitcomb, "Using Low Cost Magnetic Sensors on Magnetically Hostile Land Vehicles," *IEEE Position, Location, and Navigation Symposium*, Nov. 30, 1988, pp. 34-38.

13):

$$a^b{}_x = (-lv\omega^2 + a\surd(v^2)) / \surd(l^2\omega^2 + v^2) \qquad \text{(EQN. 1)}$$

$$a^b{}_y = (v^2\omega + al\omega) / \surd(l^2\omega^2 + v^2) \qquad \text{(EQN. 2)}$$

for

$$\surd(l^2\omega^2 + v^2) > 0$$

where

l = vehicle wheel base
v = wheel speed
a = wheel acceleration (rate of change of wheel speed)
$\omega$ = turn rate (rate of change of heading)

Accuracy of the acceleration estimate is limited by the resolution and noise of the wheel speed sensor and heading sensor. The turn rate estimate is particularly affected by systematic errors in the compass output caused by sensor tilt and other uncompensated hard/soft iron (i.e., ferrous metal) effects.

Acceleration induced tilts of the heading sensor are pitch ($\theta$) and roll ($\phi$) angles

$$\phi = \tan^{-1}(a^b{}_y/g) \qquad \theta = \tan^{-1}(a^b{}_x/g) \qquad \text{(EQN. 3, 4)}$$

where

g = local gravity

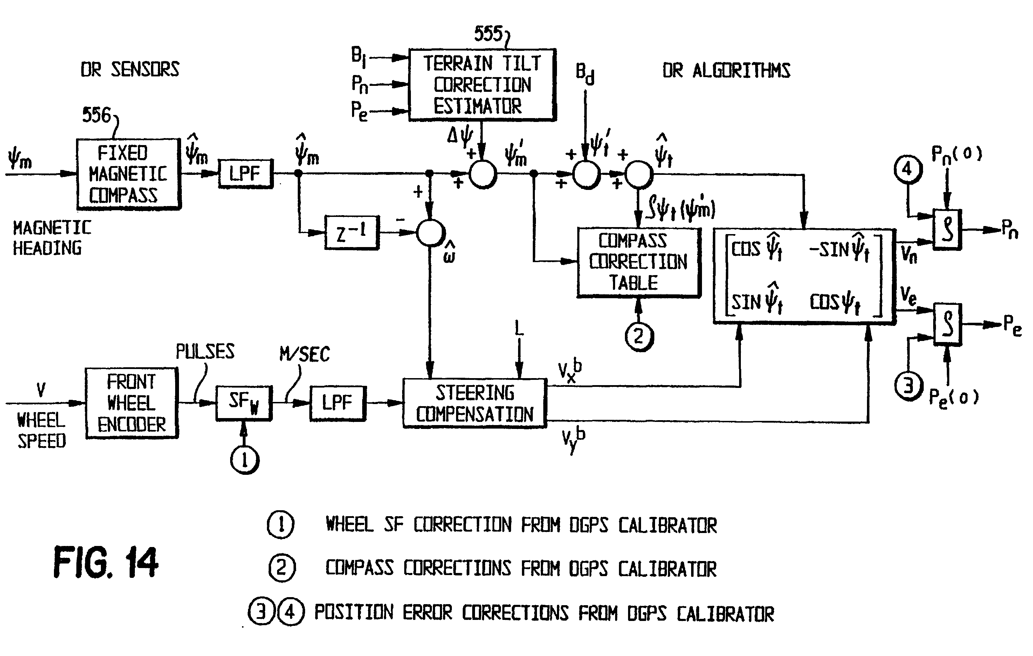

**FIG. 13** is a simplified top view of the golf cart **550** showing the front wheels **551** (left) and **552** (right) angled in a turn and the various angles and dimensions used in calculations,

where

a = rate of change of wheel speed
$a_r$ = radial acceleration
r = turn radius
$\omega$ = turn rate
l = wheel base

$$r = (v/\omega) \qquad \text{(EQN. 5)}$$

$$\alpha = \tan^{-1}(l/r) = \tan^{-1}(l\omega/v) \qquad (v \neq 0) \qquad \text{(EQN. 6)}$$

$$\text{Radial accel} = a_r = v\omega, \text{ tangential accel} = a$$

Transform accel to body frame of vehicle

$$\begin{bmatrix} a^b{}_x \\ a^b{}_y \end{bmatrix} = \begin{bmatrix} \cos\alpha & -\sin\alpha \\ \sin\alpha & \cos\alpha \end{bmatrix} \begin{bmatrix} a \\ vw \end{bmatrix} \qquad (EQN.\ 7)$$

Note:

$$\sin\alpha = \omega l / \sqrt{(\omega^2 l^2 + v^2)}$$

$$\cos\alpha = \sqrt{(v^2)} / \sqrt{(\omega^2 l^2 + v^2)} \qquad (EQN.\ 8,\ 9)$$

Therefore:

$$a^b{}_x = (a\sqrt{(v^2)} - \omega^2 l v) / \sqrt{(\omega^2 l^2 + v^2)} \qquad (EQN.\ 10)$$

$$a^b{}_y = (\omega l a + \omega v^2) / \sqrt{(\omega^2 l^2 + v^2)} \qquad (EQN.\ 11)$$

The apparent magnetic heading output from a compass sensor that is tilted through the pitch and roll angles $(\theta,\phi)$ can be shown to be:

$$(\sin\hat{\Psi}_m / \cos\hat{\Psi}_m) = (-\cos I (\cos\Psi_m \sin\phi \sin\theta + \sin\Psi_m \cos\theta) + \sin I \sin\phi \cos\theta)/$$

$$(\cos I \cos\Psi_m \cos\theta + \sin I \sin\theta) \qquad (EQN.\ 12)$$

where

I =  Earth magnetic field inclination
$\Psi_m$ =  true magnetic heading
$\hat{\Psi}_m$ =  measured magnetic heading

for small induced heading errors
such that

$$\cos\Psi_m = \cos\hat{\Psi}_m + \sin\hat{\Psi}_m \Delta\Psi \qquad (EQN.\ 13)$$

$$\sin\Psi_m = \sin\hat{\Psi}_m - \cos\hat{\Psi}_m \Delta\Psi \qquad (EQN.\ 14)$$

Inserting (EQN. 13) and (EQN. 14) into (EQN. 12) and solving for $\Delta\Psi$ yields the desired magnetic heading correction:

$$\Delta\Psi = -(\cos I(\cos^2\hat{\Psi}_m \sin\phi\sin\theta + \sin\hat{\Psi}_m \cos\hat{\Psi}_m(\cos\theta - \cos\phi)) +$$
$$\sin I(\sin\hat{\Psi}_m \sin\theta - \cos\hat{\Psi}_m \sin\phi\cos\theta )) / \qquad (EQN.\ 15)$$
$$(\cos I(\sin^2\hat{\Psi}_m \cos\theta + \sin\hat{\Psi}_m \cos\hat{\Psi}_m \sin\phi\sin\theta + \cos^2\hat{\Psi}_m \cos\phi))$$

$$\Psi'_m = \hat{\Psi}_m - \Delta\Psi \qquad (EQN.\ 16)$$

Steering compensation (**FIG. 13**) is achieved as follows. If a front wheel is being used for speed determination, it must be noted that the direction of the front wheels **551**, **552** is not aligned with the vehicle body frame **550** in a turn. Turned front wheels induce velocity in both the vehicle x and y axes.

The steering angle is determined from the wheel speed, turn rate, and wheel base as shown in **FIG. 13:**

$$\alpha = \tan^{-1}(l\omega/v) \qquad (v \neq 0) \qquad \text{(EQN. 17)}$$

Velocity in the vehicle body frame is then

$$v_x^{\ b} = v\cos\alpha \qquad \text{(EQN. 18)}$$

$$v_y^{\ b} = v\sin\alpha \qquad \text{(EQN. 19)}$$

For compass correction (**FIG. 13**), true heading of the vehicle must be computed from the magnetic heading from the compass. Magnetic heading must be corrected for the Earth magnetic field declination ($\beta_d$) and for mounting errors on the vehicle and residual hard/soft iron (ferrous material) errors. These mounting and ferrous material errors are estimated by the DGPS/DR calibrator **519** (**FIG. 9**) essentially by comparing the estimated true heading ($\Psi_{t'}$) to the ground track angle computed from GPS measurement data. A correction to the compass correction table is computed based on this heading residual. The compass correction table is a lookup table that is indexed by magnetic heading. The error in the table at the current magnetic heading is applied to the magnetic heading to form a corrected true heading.

One of the alternative approaches to a DR system implementation, relative to the preferred approach of the floated sensor compass and single front wheel sensor in the just-described preferred embodiment of the invention, is the fixed sensor compass/single front wheel sensor that also requires a terrain database for slope locations. As previously observed herein, this makes such an alternative approach less desirable, but a practical technique for generating such a database has been implemented which places the approach in the viable alternative category. **FIG. 14** is a block diagram, similar in many respects to **FIG. 12**, showing the implementation of the alternative approach. It will be observed that the most significant differences between the two Figures are the replacement of the compass tilt estimate correction with a terrain tilt correction estimator at **555**, and use of fixed compass **556**, in **FIG. 14.**

The premise for the use of this terrain estimator is that the accuracy of the magnetic heading output of a fixed compass sensor is reduced when the sensor is tilted out of the horizontal plane, so that it is no longer level. This occurs when the vehicle is on an inclined terrain such as proceeding up, down, or along the side of hills[4] (any sloping terrain) on the course. For operation over a limited area, such as a golf course, a terrain map of the area can be stored in the navigation system computer for use in correcting the fixed compass outputs for tilt errors. Terrain grade and direction of slope can be determined as a function of position of the cart. For example, the area of interest may be divided into a grid with a unique slope/direction stored in the computer for each element of the grid. The grid element slope to be used for correction of the compass output is then determined by the cart position estimated by the DR navigation system.

The determination of corrected north and east position information $P_n$ and $P_e$ in the fixed compass/front wheel sensor approach of **FIG. 14** is analogous to that described in **FIG. 12**, given the principal changes noted above.

The slope of the terrain is preferably in computer memory stored with a direction ($\Psi_s$) and a grade angle ($\theta_s$). The pitch and roll ($\theta, \phi$) of the fixed compass sensor on the vehicle may be computed as follows:

$$c^b_{\ s} \approx \begin{bmatrix} \cos\Psi_m & \sin\Psi_m & 0 \\ -\sin\Psi_m & \cos\Psi_m & 0 \\ 0 & 0 & 1 \end{bmatrix} \qquad \text{(EQN. 20)}$$

---

[4]See Whitcomb, supra.

$$c^s_n = \begin{bmatrix} -\cos\theta_s\cos\Psi_s & \cos\theta_s\sin\Psi_s & -\sin\theta_s \\ -\sin\Psi_s & \cos\Psi_s & 0 \\ \sin\theta_s\cos\Psi_s & \sin\theta_s\sin\Psi_s & \cos\theta_s \end{bmatrix} \qquad \text{(EQN. 21)}$$

$$c^b_n = \begin{bmatrix} \cos\hat{\Psi}_m\cos\theta_s\cos\Psi_s - \sin\hat{\Psi}_m\sin\hat{\Psi}_s & \cos\hat{\Psi}_m\cos\theta_s\sin\Psi_s + \sin\hat{\Psi}_m\cos\Psi_s & -\cos\hat{\Psi}_m\sin\theta_s \\ -\sin\hat{\Psi}_m\cos\theta_s\cos\Psi_s - \cos\hat{\Psi}_m\sin\Psi_s & -\sin\hat{\Psi}_m\cos\theta_s\sin\Psi_s + \cos\hat{\Psi}_m\cos\Psi_s & \sin\hat{\Psi}_m\sin\theta_s \\ \sin\theta_s\cos\Psi_s & \sin\theta_s\sin\Psi_s & \cos\theta_s \end{bmatrix}$$

$$\text{(EQN. 22)}$$

extract $\phi$, $\theta$ from $c^b_n$:

Given $\phi$, $\theta$ the heading correction is computed as shown in (EQN. 15), above.

In EQN. 20, the expression relates to Direction Cosine Matrix (DCM) from sloped reference frame to body reference frame. DCM is used to transform from one reference frame to another in navigation systems. In EQN. 21, the expression relates to DCM from North, East, Down (NED) reference frame to slope reference frame.

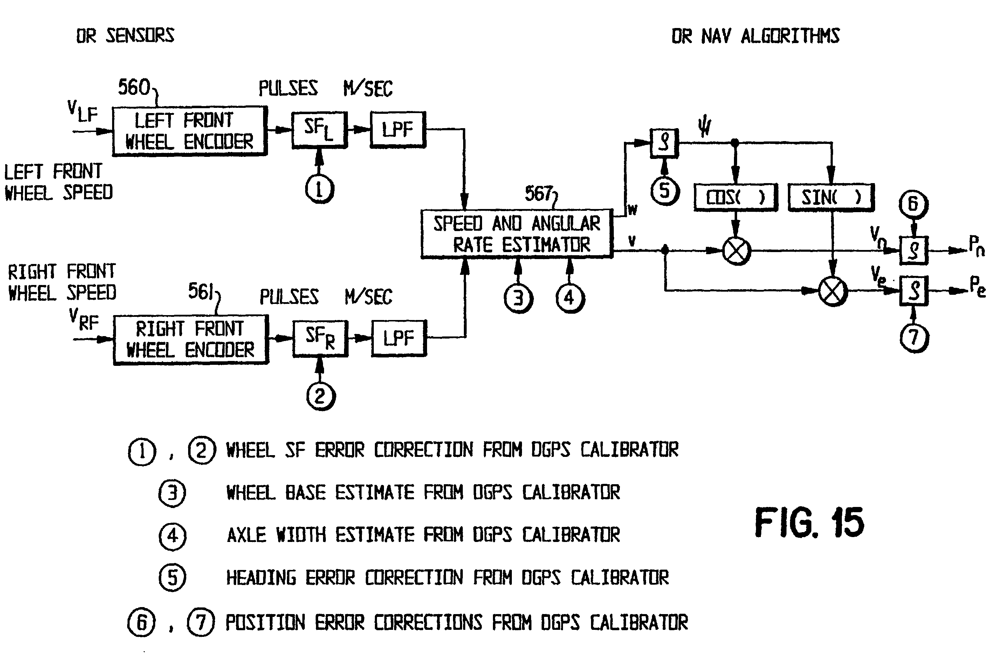

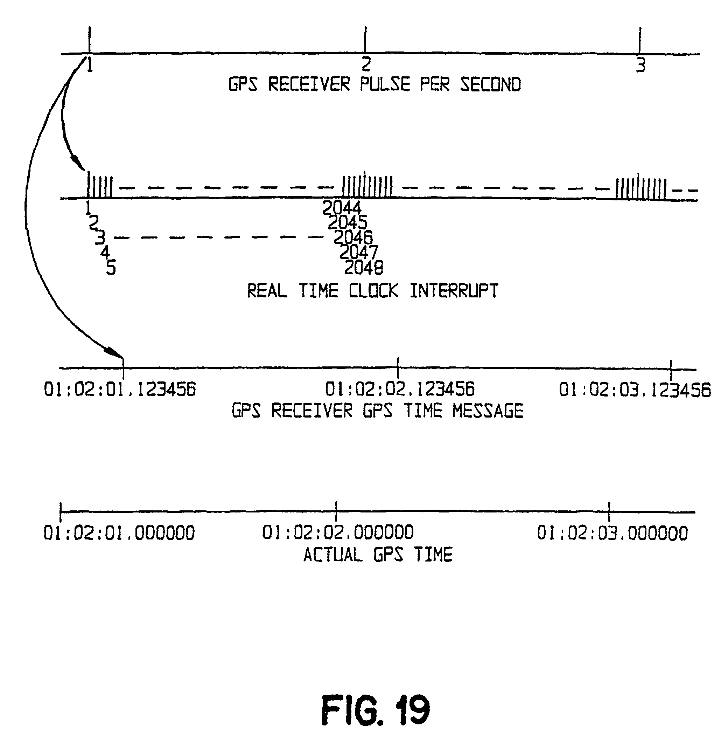

In another alternative implementation approach for the DR system, also mentioned earlier herein, dual front wheel sensors are used to detect wheel rotation and the difference between the wheel rotations is also detected. These provide measurements of distance and angular rate, respectively. **FIG. 15** is a block diagram of the system implementation for this alternative approach. Some similarities to **FIGS. 12** and **14** are evident, but this embodiment is a departure from those of the former two Figures, both of which use a compass sensor as well as a wheel sensor. Corrected north and east position information $P_n$ and $P_e$ for dead reckoning navigation are determined using the two wheel encoder sensors **560** (left) and **561** (right) mounted on the front wheels of the golf cart (illustrated in **FIG. 16**, a simplified top view of the cart, which is similar in many respects to **FIG. 13**). In essence, the average speed of the two front wheels is the speed of cart **565**, and the turn rate of the cart is related to the difference between the speeds of the two wheels. The calculations for deriving the two front wheel speeds and for deriving the speed and angular rate estimation (at **567** of **FIG. 15**), however, are more complex than would appear from the rather simple statement made in preceding sentence. In **FIG. 16**, terms and symbols have the following meanings:

$v$ = speed of vehicle
$\omega$ = turn rate
$r$ = radius of turn to vehicle center line
$l$ = wheel base
$f$ = front axle width
$v_o$ = speed of outside turn wheel
$v_j$ = speed of inside turn wheel

Wheel speeds are:

$$v_o{}^2 = v^2 + \omega^2 l^2 + \omega v f + (\omega^2 f^2/4) \qquad \text{(EQN. 23)}$$

$$v_j{}^2 = v^2 + \omega^2 l^2 - \omega v f + (\omega^2 f^2/4) \qquad \text{(EQN. 24)}$$

Solving the above two equations simultaneously for v and w:

$$v^2 = ((v_j{}^2 + v_o{}^2)/4) + 1/2f(\sqrt{(f^2 v_j{}^2 v_o{}^2 - l^2(v_o{}^2 - v_j{}^2)^2)}) \qquad \text{(EQN. 25)}$$

$$\omega = (v_o{}^2 - v_j{}^2)/2fv \qquad |v| > 0 \qquad\qquad\qquad \text{(EQN. 26)}$$

An accurate navigation solution is highly dependent on accurate and high resolution wheel sensor measurements, because the determinations of v and ω are quite sensitive to small errors in the measurements. Simple logic is employed in the system of **FIG. 15** to determine the direction of the turn and whether the cart is moving forward or backward. This enables the left or right wheel data to be interpreted correctly as the inside or outside turn wheel.

Implementation of the DR (DGPS/DR) calibrator **519** of **FIG. 9** is illustrated in greater detail in the block diagram of **FIG. 17.** The DR calibrator compares the DR navigation solution to the DGPS data and corrects the errors in the DR solution, to provide an accurately calibrated DR navigation system. The essence of the correction and calibration technique is the formulation of a correction gain computation and the number of DR sensor errors to be calibrated. The approaches frequently used to provide correction gain computation include *ad hoc* designs, complementary filter design, and Kalman filter design.

Use of the Kalman filter (KF) is the preferred approach. *Ad hoc* designs tend to be simplistic and to be based on guesses (albeit educated) concerning the error characteristics of the sensors and their effect on the errors in the navigation solution. Although the design time is generally relatively short, *ad hoc* techniques are usually too simplistic to provide high performance calibration. In contrast, a complementary filter requires analysis of the error characteristics of the sensors and the choice of a fixed gain to weight the correction, so that sensor inputs with the least expected error have the greatest affect on the corrected navigation solution. Complementary filters are typically used when the error dynamics (i.e., the manner in which sensor errors propagate into navigation solution errors) do not change with time.

The Kalman filter provides a mathematical formulation to optimally correct (i.e., calibrate) a system with time varying error dynamics such as a DR navigation system, based on the error characteristics of each sensor, sensor errors, and DR navigation errors. The KF estimates the optimum result from numerous inputs that are corrupted by noise. In Kalman filtering, it is common to estimate the error in a state, rather than the state itself. For example, a Kalman filter is used to estimate the error in the wheel scale factor as opposed to estimating the wheel scale factor itself. The KF implementation used in conjunction with the present invention performs error state propagation instead. The general KP formulation for error state propagation is as follows:[5]

$$P^-_K = \Phi_{K-1} P^+_{K-1} \Phi^T_{K-1} + \theta_{K-1} \qquad\qquad \text{(EQN. 27)}$$

$$X^-_K = \Phi_{K-1} X^+_{K-1} \qquad\qquad \text{(EQN. 28)}$$

[Note: In Kalman filter notation, it is common to use - and + sign superscripts to indicate the state before and after the incorporation of the latest measurement, respectively; i.e., $X^-_K$ is the state before the measurement is taken, and $X^+_K$ is the state after the measurement is taken.]

where

X =  system error state, and represents several errors in a DR system such as north (N) and east (E) position errors, wheel SF error, compass alignment errors, etc.

P =  the error state covariance[6]

Φ =  the error state transition matrix which indicates how certain error states affect other errors

$$\dot{X} = AX + w$$

$$\Phi = e^{A\Delta t}$$

w =  noise

θ =  represents uncertainty in error state values or propagation characteristics attributable to sensor noise or modeling uncertainty

[5]R.G. Brown, *Introduction to Random Signal Analysis and Kalman Filtering*, John Wiley and Sons, 1983.
[6]In Kalman filter formulations, the error state covariance is a matrix that contains a measurement of the uncertainties in the error state estimates. The diagonals of the matrix contain the variances of each state variable. The off diagonal terms contain the correlations between state variables. The covariance matrix is propagated over time and is used to determine how well the Kalman filter has estimated certain error states.

In the DR navigation system calibration, when a DGPS measurement is made, a gain is computed and the error state and error state covariance are updated. The change in the error state is applied to the appropriate DR navigation algorithm state variables to correct the solution and calibrate the sensor errors.

$$K = P^-_K H^T (HP^-_K H^T + R)^{-1} \qquad \text{(EQN. 29)}$$

$$P^+_K = P^-_K - KHP^{-1}_K \qquad \text{(EQN. 30)}$$

$$X^+_K = X^-_K + K(Z-HX^-_K) \qquad \text{(EQN. 31)}$$

where

Z = the measurement residual, e.g., the difference between DR east position and DGPS east position
H = the measurement matrix which indicates how each error state affects the error in the measurement residual
R = the expected noise contribution to the measurement residual.
For DGPS this may be adjusted up or down based on modeled receiver noise and satellite geometry which can affect the accuracy of a GPS position fix.

In the update methods, the relative merits of PVT (position, velocity, time) vs. raw measurements are set forth below. PVT represents the standard output of a GPS receiver that most users use Latitude, Longitude, Altitude, North Velocity, East Velocity, and Time specifically are the PVT outputs. This is in contrast to raw measurements which are the raw LOS measurements from the GPS receiver to each satellite and are defined in terms of the pseudo range from the receiver to the satellite and the range rate (rate of change of rate or LOS velocity between the GPS receiver and the satellite).

PVT:

- easier to formulate
- fewer error states
- less computation, memory requirements
- less robust -> must dead reckon more without aiding[7]
- tend to lose correlation between states
- engine filtering causes problems when filters are cascaded

Raw measurements:

- most robust, can use 1, 2, 3, or more SVs (satellite vehicles) -> almost never required to dead reckon without aiding
- more filter states
- more memory, more processing power
- GPS engine may not support raw measurements

Raw measurement is clearly better, but there may be times when PVT is preferred simply because it is much easier to implement in software, and does not require as powerful a computer if a GPS engine is already providing PVT data. Therefore, examples of both approaches are presented below for DR navigation system with compass/front wheel sensor, and for DR navigation system with dual front wheel sensors.

KF formulation for DR system(s) with compass and front wheel sensor:

Simplified PVT:

Modeled error states

[7]The PVT implementation will need to dead reckon for longer periods of time without the benefit of DGPS calibration, because at least four satellites are required for the GPS receiver to provide a PVT solution. If there are less than four satellites, then no DGPS calibration can be provided to the DR system. In contrast, the raw measurement implementation does not need four satellites to provide DGPS calibration to the DR system. In fact, as little as one satellite can provide some DGPS calibration benefit. Hence, the raw measurement implementation is able to provide almost constant calibration to the DR system, and is thus considered more robust.

$\delta P_n$ =     north position error
$\delta P_e$ =     east position error
$\delta SF$ =     wheel SF error
$\delta \Psi$ =     heading error (compass alignment)

Error propagation model:

$$\dot{X} = A \quad X + w$$

$$(d/dt)\begin{bmatrix} \delta P_n \\ \delta P_e \\ \delta SF \\ \delta \Psi \end{bmatrix} = \begin{bmatrix} 0 & 0 & v_n & v_e \\ 0 & 0 & v_e & -v_n \\ 0 & 0 & 0 & 0 \\ 0 & 0 & 0 & 0 \end{bmatrix} \begin{bmatrix} \delta P_n \\ \delta P_e \\ \delta SF \\ \delta \Psi \end{bmatrix} + \begin{bmatrix} 0 \\ 0 \\ w_{SF} \\ w_{\Psi} \end{bmatrix} \qquad (EQN.\ 32)$$

The noise models for $w_{SF}$, $w_{\Psi}$, would be dependent to some extent on the measured vehicle navigation state. For example, compass acceleration compensation may have errors associate with modeling float or pendulum dynamics under high g turns or extreme tilts outside the range of the float to compensate. For fixed compasses, the heading correction noise model may be affected, for example, by uncertainty about the terrain map accuracy. The noise models affect the value of $\theta$ for each propagation stage.

The above error model has a single heading error state for clarity of the description. For typical magnetic compasses, a more detailed error model is necessary. The DR navigation algorithms discussed in connection with **FIGS. 12** and **14** have a heading correction lookup table which supports different heading corrections at different heading values. These can be included in the filter by adjusting the heading error noise and covariance for a single error state as the vehicle heading changes or by including multiple heading error states, one for each of the several heading ranges.

Measurement update:
This KF formulation supports DGPS position fixes (other formulations could use position and velocity)

East position:

$$Z = DR_e - DGPS_e \qquad (EQN.\ 33)$$

$$H = [\ 0\ 1\ 0\ 0\ ] \qquad (EQN.\ 34)$$

North position:

$$Z = DR_N - DGPS_N \qquad (EQN.\ 35)$$

$$H = [\ 1\ 0\ 0\ 0\ ] \qquad (EQN.\ 36)$$

For each updated measurement, K is computed based on P, H, R. The covariance P is updated and the error state X is updated.
The updated error state will typically have updated elements for most state and sensor errors, depending on the vehicle (cart) trajectory (this term includes cart heading, speed, acceleration, tilts, etc.). The error states may then be transferred to the DR navigation algorithm variables:

$$DR^+_n = DR^\cdot_n - X^+_K \qquad 3 \quad\rceil \qquad\qquad \text{(EQN. 37)}$$

$$DR^+_e = DR^\cdot_e - X^+_K \qquad 4 \quad\left.\right| \quad \text{See} \qquad \text{(EQN. 38)}$$

$$SF^+_w = SF^\cdot_w - X^+_K \qquad 1 \quad\left.\right| \quad \text{FIG. 12} \qquad \text{(EQN. 39)}$$

$$\delta\Psi^+_t = \delta\Psi^\cdot_t - X^+_K \qquad 2 \quad\rfloor \qquad\qquad \text{(EQN. 40)}$$

$$X^+_K = 0 \qquad\qquad\qquad\qquad\qquad \text{(EQN. 41)}$$

Depending on the requirements of real-time filter implementation issues, part or none of $X_K$ would be transferred to algorithm state variables on any given update cycle.

Simplified raw measurement filter:

Modeled error states

$\delta P_n =$ DR north position error
$\delta P_e =$ DR east position error
$\delta P_d =$ DR down position error
$\delta SF =$ wheel SF error
$\delta \Psi =$ heading correction error
$\delta C_X =$ GPS receiver clock bias
$\delta C_{\dot{X}} =$ GPS receiver clock velocity
$\delta C_{\ddot{X}} =$ GPS receiver clock accel

Error propagation model:

$$(d/dt)\begin{bmatrix} \delta P_n \\ \delta P_e \\ \delta P_d \\ \delta SF \\ \delta\Psi \\ \delta C_X \\ \delta C_{\dot{X}} \\ \delta C_{\ddot{X}} \end{bmatrix} = \begin{bmatrix} 0 & 0 & v_n & v_e & 0 & 0 & 0 \\ 0 & 0 & +v_e & -v_n & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 1 & 0 \\ 0 & 0 & 0 & 0 & 0 & 0 & 1 \\ 0 & 0 & 0 & 0 & 0 & 0 & 0 \end{bmatrix}\begin{bmatrix} \delta P_n \\ \delta P_e \\ \delta P_d \\ \delta SF \\ \delta\Psi \\ \delta C_X \\ \delta C_{\dot{X}} \\ \delta C_{\ddot{X}} \end{bmatrix} + \begin{bmatrix} 0 \\ 0 \\ w_{Pd} \\ w_{SF} \\ w_\Psi \\ w_{CX} \\ w_{C\dot{X}} \\ w_{C\ddot{X}} \end{bmatrix} \quad \text{(EQN. 42)}$$

This formulation is similar to the PVT formulation, with the addition of GPS receiver clock error states $\delta C_X$, $\delta C_{\dot{X}}$ and $\delta C_{\ddot{X}}$ and vertical (down) position error. The number of states used to model GPS receiver clock error depends on the characteristics of the GPS receiver clock -- typically. bias and velocity states are required.

Raw LOS measurements span three dimensions in position. Therefore, vertical position error must be included in the filter.

Measurement update:

This KF formulation supports pseudo range (PR) updates only; other formulations could support both PR and range rate (RR) updates. PR measurements are taken by the receiver for each available satellite. If a DGPS correction is available for the satellite, it is applied. The corrected PR measurement is compared to the expected PR to the SV: the distance to the SV plus the receiver clock error.

$$Z = (R + \delta C_X) - PR_{DGPS} \qquad\qquad \text{(EQN. 43)}$$

$$R = \sqrt{((DR_N - SV_N)^2 + (DR_E - SV_E)^2 + (DR_d - SV_d)^2)} \qquad \text{(EQN. 44)}$$

The measurement matrix H contains the line of sight direction cosines from the DR navigation solution to the SV and the clock error. The LOS for each SV is unique; the clock error is common to all measurements.

$$H = [\qquad \cos_N \qquad \cos_E \qquad \cos_d \qquad 0 \qquad 0 \qquad 1 \qquad 0 \qquad 0 \qquad] \qquad \text{(EQN. 45)}$$

As with the PVT solution discussed above, K is computed based on each P, H, R for each measurement. The covariance, P, and the state X are updated. As with the PVT design, the updated error state is transferred to the DR navigation algorithm variables. Clock errors are typically retained in the filter.

KF formulation for DR system with dual front wheel sensors:

PVT KF

Modeled error states

$\delta P_n =$     DR north position error
$\delta P_e =$     DR east position error
$\delta \Psi =$     DR heading error
$\delta f =$     front axle width error
$\delta l =$     wheel base error
$\delta SF_L =$     left front wheel SF error
$\delta SF_R =$     right front wheel SF error

$$
\begin{bmatrix} \delta P_n \\ \delta P_e \\ \delta \Psi \\ \delta f \\ \delta l \\ \delta SF_L \\ \delta SF_R \end{bmatrix}
=
\begin{bmatrix}
0 & 0 & -v\sin\Psi & \cos\Psi(\delta v/\delta f) & \cos\Psi(\delta v/\delta \beta) & \cos\Psi(\delta v/\delta SF_L) & \cos\Psi(\delta v/\delta SF_R) \\
0 & 0 & v\cos\Psi & \sin\Psi(\delta v/\delta f) & \sin\Psi(\delta v/\delta \beta) & \sin\Psi(\delta v/\delta SF_L) & \sin\Psi(\delta v/\delta SF_R) \\
0 & 0 & 0 & \delta w^1/\delta l & \delta w/\delta l & \delta w/\delta SF_L & \delta w/\delta SF_R \\
0 & 0 & 0 & 0 & 0 & 0 & 0 \\
0 & 0 & 0 & 0 & 0 & 0 & 0 \\
0 & 0 & 0 & 0 & 0 & 0 & 0 \\
0 & 0 & 0 & 0 & 0 & 0 & 0
\end{bmatrix}
\begin{bmatrix} \delta P_n \\ \delta P_e \\ \delta \Psi \\ \delta f \\ \delta l \\ \delta SF_L \\ \delta SF_R \end{bmatrix}
+
\begin{bmatrix} 0 \\ 0 \\ w_\Psi \\ w_f \\ w_l \\ w_{SFL} \\ w_{SFR} \end{bmatrix}
$$

$$\text{(EQN. 46)}$$

The partial derivatives in the state transition matrix can be easily computed from the dual front wheel sensor DR navigation equations set forth earlier herein.

Dual front wheel sensor navigation accuracy is very dependent on accurate wheel base, axle width, and wheel scale factors. Wheel base, and axle width are included in the filter to allow it to estimate any error in the nominal value. Noise inputs on these constants are modeled to allow the filter to continuously slightly revise the estimates of the parameters.

The measurement update for this filter is virtually identical to that of the PVT front wheel sensor/compass filter case; only more error states in this filter.

Updated error states are transferred to the DR navigation algorithm variables:

$$DR^+_n = DR^-_n - X^+_K 1 \quad 6$$
$$DR^+_e = DR^-_e - X^+_K \quad 7$$
$$DR^+_\psi = DR^-_\psi - X^+_K \quad 5$$
$$DR^+_f = DR^-_f - X^+_K \quad 4$$
$$DR^+_i = DR^-_i - X^+_K \quad 3$$
$$DR^+_{SFL} = DR^-_{SFL} - X^+_K \quad 1$$
$$DR^+_{SFR} = DR^-_{SFR} - X^+_K \quad 2$$

See FIG. 15

(EQN. 47)
(EQN. 48)
(EQN. 49)
(EQN. 50)
(EQN. 51)
(EQN. 52)
(EQN. 53)

Raw measurement filter:

The raw measurement formulation for this filter directly follows the changes required for the front wheel sensor/compass filter. That is, a vertical position error state is added and GPS receiver clock error states are added. The DGPS LOS measurement updates are processed as they are for the front wheel sensor/compass design.

**FIG. 18** is a block diagram of the PROLINK communications system, in which an information source **101** (base station or cart) supplies information processed through a source encoder **102**, an encryptor **103**, a channel encoder **104**, and a data modulator **105**, for transmission over channel **107.** At the receiving end, the incoming data is demodulated (**109**), bit synchronized (**110**), processed through channel decoder **111**, decryptor **112**, source decoder **113**, and displayed at **114.**

The RF transceiver uses frequency shift keying (FSK), a simple and inexpensive digital modulation technique in which efficient use of bandwidth for data transmission is achieved here by use of a variable length packet communications network with precise time division multiplexing (TDM) scheme. In this scheme, all information is sent and received in time slices on a single frequency and each cart, as well as the base station, transmits its information at precise times allocated so that only one is transmitting at any given instant of time. Thus, no base station polling of the carts is required as a prerequisite to send information, resulting in savings in bandwidth. A variable link network provides efficient transmission and receipt of information with apparent high speed at only 2048 bps (demanding precise system timing), and with timing accuracy of CMS and CBUs to one-half millisecond (ms).

**FIG. 19** illustrates system timing mechanization, with actual GPS time line depicted at the bottom of the Figure. The first time point is chosen arbitrarily, the time line starting at 01:02:1.0 seconds (sec), moving to 01:02:2.0 sec., then 01:02:03.0 second, and continuing on indefinitely. The GPS system has extremely precise timing, with GPS receivers employing the pulse-per-second (PPS) output as a typical method of informing a user of the time that a particular measurement is valid.

The PROLINK system receives the PPS signal from the GPS receiver as an interrupt into the CPU. The interrupt informs the PROLINK software of the instant in time (accurate to about 1 microsecond) at which the time and position message to be subsequently received over the GPS receiver serial interface is valid. This message is received by the CPU up to 0.5 seconds after the PPS signal. The PPS event is used to reset the real-time interrupt counter which interrupts the processor at 2048 Hz.

Upon receipt of the position/time message from the GPS receiver, the GPS time at which the last PPS occurred is known. The number of 2048 Hz interrupts received since the PPS occurred can be counted to synchronize the system to GPS time. This allows time to be maintained accurately to 1/2048 second or slightly better than 0.5 milliseconds, and ensures that tick zero of the 2048 Hz real-time clock is aligned with the GPS integer second.

The PROLINK system is also capable of calibrating errors in the real-time clock using the GPS PPS signal. Each time a PPS signal is received, a count of 2048 real-time clock interrupts is expected, but if less than 2048 interrupts have been received between successive received PPS signals, the clock is running too slow. For example, if only 2000 interrupts were counted, then the clock is running 48/2048 seconds too slow; or if more than 2048 interrupts have been received since the last PPS signal, the clock is running too fast. The count difference relative to the expected 2048 counts can be used to correct the interrupt time and to produce counts as close as possible to 2048 occurring between successive received PPS signals.

It is not actually necessary that the PPS from the GPS receiver be synchronized to GPS time in integer seconds. As noted in reference to **FIG. 19**, the integer GPS time starting at 01:02:01.00 sec., for example, does not correspond to the exact time at which the PPS actually occurred as indicated by the GPS receiver GPS time message. Rather, the PPS actually occurred at 01:02:01.123456 sec. Hence, the fact that integer second synchronization of the PPS exists on some GPS receivers and not on others is immaterial to proper operation of the PROLINK system.

For ACUTRAK system usage, the system may still rely and preferably does rely on GPS for timing purposes. The base station (e.g., clubhouse) antenna will generally always be positioned for good line of site visibility to several GPS satellites, unlike the carts on the golf course which are often masked from the satellites by trees and terrain. However, even if GPS were not available for a particular reason, the timing would be keyed from the broadcast transmissions of the base station transmitter at the beginning of each integer second. All carts would then be synchronized for timing to the base station every second broadcasts. Preferably, the base station timing for the carts is a backup to the GPS timing, so that if the GPS is unavailable the timing is switched to the base station. All network participants need only be initialized to indicate when they are allowed to transmit. Thereafter, each is free to transmit in its own unique, specific time slot asynchronous of direct base station timing control, except when the base station is to provide direct synchronization.

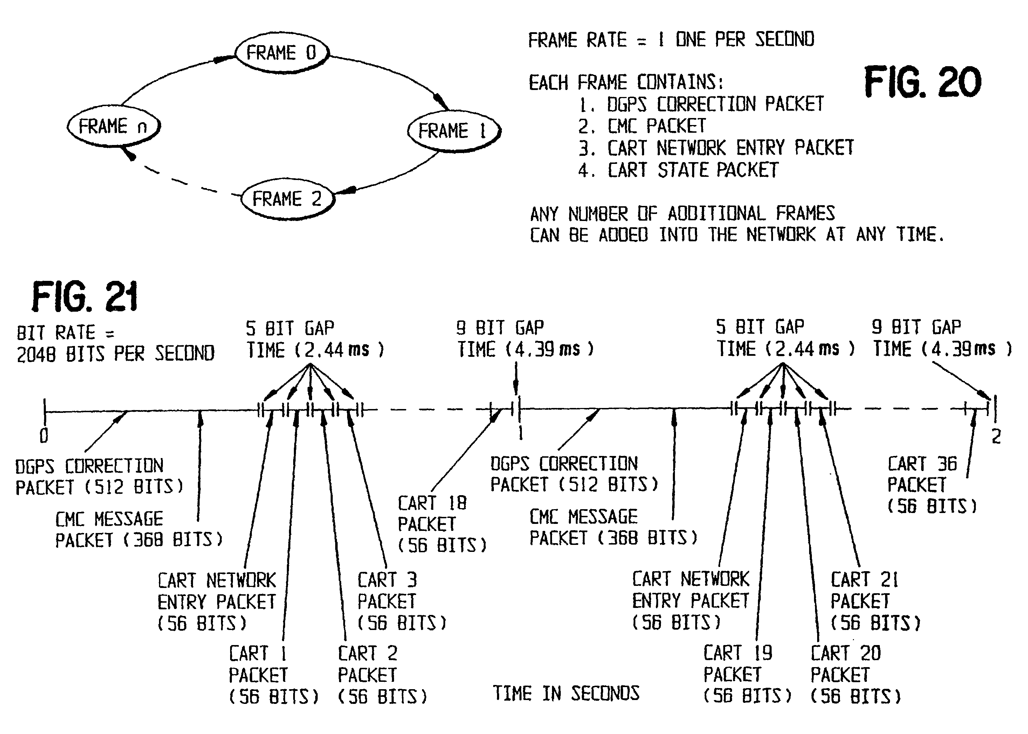

In the variable length packet communications network of the system illustrated in **FIG. 20**, each cart has a designated time slot for allowed transmissions. The carts independently know their respective time slots from the timing provided by the GPS receiver. Hence, when a particular cart's time slice arrives, the cart broadcasts a very short data burst and then exits the frequency. Then, the next cart broadcasts a data burst, and so on until all carts have had the opportunity to send information. The base station transmissions are also multiplexed onto the allocated frequency with its own time slot. Digital messages containing data packets are transmitted between base station and carts in TDM format. Each message may have a single packet or multiple packets, but available channel bandwidth is enhanced by packing many packets in a message. Each message has an identifying header, and, in general, bit synchronization information is provided at the beginning of each message.

**FIG. 21** illustrates an exemplary communications network packet timing diagram of the variable length network. With the communications bit rate of 2048 bps, the base station message in a frame may occupy 768 bits which is equal to 37.5% of the available transmission time (375 ms). Each cart message in a frame may occupy 72 bits, or approximately 3.5 % of the available transmission time (35 ms). Between transmissions, 3 bits (1.46 ms) allow the current transmitter to cease transmitting (i.e., to release the transmitter key line to drop the carrier power) and the new transmitter to begin transmitting (i.e., to assert the transmitter key line to generate carrier power).

The data rate of 2048 bps is selected because of fast interrupt rate, and convenience from a system architecture design perspective in use of a power of 2 bit rate because bits can be shifted by one position to the right to divide by two or to the left to multiply by 2. In a real time operating system, this avoids extensive computations of floating point systems through use of computationally efficient bit shifts.

A 78 bit gap immediately after the base message transmission allows carts to enter the network via a 72 bit cart message. At the end of the frame, a 5 bit gap (2.44 ms) exists before a new frame is started. A predetermined number of different carts may transmit in a single frame, for example, 16 carts/frame. Preferably, up to 16 unique frames are allowed in the presently preferred variable length network format. Thus, up to 255 carts (rather than 256, since cart address $00_{hex}$ is not allowed, being an "all call" address) may be employed in any one network. In that way, one PROLINK system base station can readily support three 18 hole courses (54 holes) operating simultaneously.

Referring back to **FIG. 20**, the frame cycle is circular with as many as **n** unique frames as denoted by frames 0, 1, ... n, where **n** is an integer set by the base (command) station according to network load requirements; hence, the name variable length network. Preferably, the maximum value of **n** is equal to 15. When few carts are on the course, the base station maintains only a relatively small number of unique frames to provide a higher update rate of the cart state packet to the course manager/administrator. This higher update rate is attributable to a need for fewer unique frames to be transmitted before the network returns again to frame 0 in the cycle.

Since the number of carts in a frame is 16, the number of additional carts accommodated by an increase in the network size is quantized at 16, because only integer frames may be added or subtracted. For example, if 20 carts are on the course, the maximum number of frames required is 2 as determined by the integer function: INTEGER[(20/16) +1]. But if more than 32 carts are on the course, the base must command a network reconfiguration to add a third frame. The fastest unique cart position updates are provided to the base station every second when 16 or fewer carts are on the course, whereas the slowest updates are given every 16 seconds when more than 240 carts are on the course. This variable length structure ensures maximum network efficiency at all times.

No interruptions of a frame or a frame cycle are allowed in mid-execution. Rather, all interruptions in frame broadcast are restricted to the beginning of an integer second at the beginning of the frame cycle. The base is responsible for timing interrupts accordingly through the use of base packet 3 (network control). On reception of network reconfiguration commands in base packet 3, all carts must wait until the end of the frame cycle before enacting the configuration change command. Examples of frame interrupts are (i) preparation for a station identification broadcast, (ii) a network reconfiguration, and (iii) network duty cycle control.

For the variable length network to operate, the base station must know at all times which carts are on the course, and must have assigned all carts a time slot within a frame for cart communications to the base.

In a case where two carts are seeking to transmit in the cart network entry time slot at the same time, it may be assumed that all cart random number generators are statistically independent provided that each cart has a different random number seed. Thus, both cart A and cart B are simultaneously attempting to transmit in the network entry time slot only 1 out of every 64 seconds. In that single conflicting frame, the base station will be unable to understand either cart. However, 7 times out of every 64 seconds ( $\approx$ 1 in 9 seconds) cart A will succeed in requesting network privileges, and 49 times out of every 64 seconds neither cart will be trying to gain access to the network. Thus, cart A will require about 9 seconds to enter the network when cart B is also attempting to gain entry, versus requiring only 8 seconds when cart A alone is requesting network privileges.

The time (in seconds) required for each cart to gain network access degrades rapidly with an increasing number of carts simultaneously requesting network privileges. It can readily be shown, for example, that if six carts were simultaneously requesting network privileges, each cart would encounter a 16 second delay before successful access to the base station. However, when one of those six carts succeeds, only five carts remain vying for network privileges, and then 4, and so forth. The total time required for all six carts to have gained access to the network is the integral of a curve, which can be shown to be 69 seconds. For 10 carts, the time period is 157 seconds for the base station to integrate all 10 carts into the network.

After the base recognizes that a cart is requesting network privileges, the base immediately broadcasts a rogue control packet (base packet 4) in the next base message addressed to the specific cart requesting privileges. Byte 0 of the packet must be $84_{hex}$ to require a cart acknowledge. The re-transmit control (upper nibble of byte 2) is set to $0_{hex}$ (no re-transmission required). If the base does not receive a cart acknowledge within two frame cycles, then the base will assume that the cart did not receive the packet and will re-transmit in the next base message, and then once each frame cycle thereafter until the cart successfully acknowledges. If no acknowledge is forthcoming in 16 frame cycles, the base station will delete the cart from the active network member list until the cart sends another network entry request in the network entry time slot.

Upon receipt of packet 4, the cart uses the lower nibble of byte 2 as the current frame indicator. The cart then has responsibility to increment the frame counter on each integer second and to roll over the frame counter (back to zero) when it exceeds the total number of frames indicated by the lower nibble of byte 3 in packet 4. The upper nibble of byte 3 contains the frame that the cart has been assigned for transmission. Byte 4 contains the subframe on which the cart is to transmit in the allocated frame. When the current frame computed by the cart equals the allocated cart transmission frame and the cart timer equals the beginning of the assigned subframe, the cart message is broadcast. In this manner, each cart broadcasts its message at its specific designated time within a specific frame so that no two carts are transmitting at the same time, and that no cart is transmitting when the base is transmitting.

In the system, the network configuration will be required frequently during normal network operations. Activities such as entry of additional carts into the network, transitioning channels and embedding a transmit/receive duty cycle to meet shared channel requirements, and station identification broadcasts, among other possibilities, necessitate network configuration changes.

For optimum network operation, the base station is tasked to allocate frames and time slots within frames to carts in sequence starting with frames 0 and 1 at network start up. When more than 32 carts are required to be in the network, frames 2 and 3 will be allocated to accommodate additional carts, and so on up to the available total of 16 frames allocable for as many as 255 carts on the network. This ensures a rapid update rate for cart position reports to the CMC, and maximizes the efficient use of available channel bandwidth. The procedure for adding or subtracting network frames will now be described.

If the number of carts required to participate in the network exceeds the number of frames allocated for or by the network, it will be necessary to add frames. In that event, the carts must be informed of the additional frames so as to alter their transmit timing. The notification is transmitted by the base station by way of the network control packet (base packet 3). Byte 6 in base packet 3 contains the current number of frames in the upper nibble and the new required number of frames in the lower nibble. If the upper and lower nibbles are equal, the cart recognizes that no network reconfiguration is taking place. However, if the number of frames in the upper and lower nibbles differ, the cart computes its new transmit timing from the initial timing and the new number of frames. This is done by maintaining the same transmission frame and subframe as originally communicated by the base in the cart control message, but with the total number of frames before cart transmission increased by the added number of frames. This, of course, means that the length of time required to complete a frame cycle is increased by the newly added frame(s), but the actual cart time slot remains the same. An analogous situation occurs where the number of carts in the network is reduced, except that the length of time required to complete a frame cycle is also reduced for the remaining carts, with resulting higher cart state packet transmission rates. Before a network size reduction, the base reassigns rogue transmit frames an subframe to lower numbered frames so that the higher numbered frames may be eliminated.

The base asserts the new number of frames at the beginning of a frame cycle and sends a network control packet every frame. By definition, the carts cannot enact a frame change until the end of a frame cycle, providing redundancy where a cart may not be receiving reliable base data. If the base fails to receive a particular cart transmission consistently over three frame cycles immediately after a network length change, the base responds by broadcasting a cart control message to that cart to verify the proper time slot data.

The base increases frame size when the number of unavailable subframes slots present in any of the currently allocated frames is less than a threshold allowed for some margin. Further, subframes vacated by carts that have left the network are filled with new carts before allocating new frames thereby maximizing channel bandwidth. Carts used for two rounds of play a day (morning and afternoon) relinquish their time slots after each round and are allocated new frames and time slots by the base at the beginning of the new round.

At the end of a round of play, the cart requests to exit the network. The base then removes the cart thereby freeing up its allocated time slot for use by other carts. If the cart is turned off before requesting exit, the base removes the cart from the network after a predetermined period of time, e.g., 15-minutes, of not receiving transmissions from that cart.

To preclude any violation of FCC rules regarding channel sharing, or any monopolizing of a channel, the PROLINK system operates under the UHF offset channel telemetry rules with not more than 2 watts of power and an antenna height not greater than 20 feet, which limits both transmission range and interference potential, and maintains from three to six frequencies. The system dictates frequent hops to alternate frequencies to allow other users to gain access to the channels to be shared.

The upper nibble of byte 5 in the network control packet (base packet 3) indicates the channel to be used by the cart. If this packet contains a different channel designation than the current channel, all carts are obliged to switch to the new channel at the end of the frame cycle. This is achieved by reprogramming the cart's RF card frequency synthesizers. The base transmission, immediately following a channel change, is padded at the beginning with 20-bytes of non-information bearing data. This enables all carts to begin switching channels at the end of the old frame cycle, and allows time for the frequency synthesizers to be reprogrammed, settle, and return to lock during the first frame of the new frame cycle without loss of any critical cart-specific information. Since the frequency synthesizers can be reprogrammed and settle within 150 ms, all carts are ready to transmit in their respective frames by the time the base completes its transmission.

The base refrains from sending any cart specific packets (packets 1 and 4) until it has received at least one DGPS packet acknowledge (cart state packet byte 0 = $50_{hex}$) on the new channel from the cart for which the specific packet is intended. This avoids the possibility of transmissions by the base to a specific cart in the unlikely event that the cart failed to make the designated channel change.

Referring back to **FIG. 3**, the base station employs two PROLINK Computer Units (PCUs) - one being the primary base transceiver (44) that operates the entire communications network, and the other (51) serving as a scanner to check all channels for traffic. On request by the CMC, PCU 51 reports all current channel traffic activity on which the CMC will base a decision on moving to a new channel. When channel is to be changed, the base maintains the upper nibble of byte 5 set to the new channel over the entire frame cycle so that all carts are notified. PCU 51 transmits a station ID on the new channel immediately after the channel change is declared and for that entire frame cycle, so that the PROLINK system immediately "claims" the new channel when it is available.

The base station can prevent carts from transmitting in their time slots by setting the upper nibble of byte 5 of the network control message to $1_{hex}$ at the beginning of a frame cycle, and transmitting a network control packet with the network halt bit asserted for each frame in the frame cycle. The process proceeds until all carts are known to be off the air, this network halting capability being provided principally for test purposes.

During the halt period, the base and the carts continue propagating the frame count and 2048 Hz counts, and all functions remain operational except the actual broadcast of information in the allocated time slot. The base may continue to broadcast if desired, but without the expectation of any cart response until the network is commanded to restart. Network restart is commanded by the base station by sending a network control packet with the upper nibble of byte 5 set to $2_{hex}$. This process is continued until all carts are known to be on the air through their packet acknowledges.

The variable length network is a hybrid acknowledge-based and repeat request-based system. The base only requires the cart to acknowledge successful receipt of certain packets at certain times, and only requests an acknowledge from a cart in one packet type in an entire frame cycle, since the cart can respond only once each frame cycle. For redundancy, the base may broadcast the same packet type with the acknowledge request set many times over the frame cycle to provide the cart a higher probability of receiving the packet, but an acknowledge would not be expected until the cart has the opportunity to broadcast in its time slot. If the base fails to receive the appropriate cart acknowledge, it assumes the cart failed to receive the packet properly and re-transmits the packet until the cart acknowledges. When no packets in a base message request acknowledge, and no golfer status is to be sent, the cart automatically sets the acknowledge condition.

Text messages are sent from the base station to the carts over as many as 16 frames, and the carts acknowledge only the successful receipt of the entire text message in the cart state packet (byte 0). If a text frame is in error, the carts can request a re-transmission of the specific frame via the cart state packet. If multiple frames are in error, the cart must broadcast a re-transmission request for each errant text frame one frame at a time until a successful receipt of the entire message can be acknowledged to the base.

The base sends a pin/tee box placement (one packet for each course hole) every 16 seconds.

System Data Packets are broadcast at approximately a rate of once every 5 minutes. The cart never acknowledges the receipt of a System Data Packet.

The cart state packets are sent by the carts to the base. If the base fails to receive 4 consecutive cart state packets during the allocated time slot, a re-transmission request is sent via the cart control packet (byte 2). Cart extended status packets are also transmitted by the carts to the base. But broadcast of the extended status packet is minimized because its transmission does not provide a cart location update to the base station. System rules as to order of priority for cart transmissions are (i) the base is always the highest priority requester for the cart, (ii) re-transmit requests have second priority, and (iii) golfer requests are third priority. A cart extended status packet is sent to the base only if multiple acknowledge requests have been made by the base without the cart having been given an opportunity to respond, or if re-transmit requests cannot be sent within the second frame cycle following the request, or if the golfer request cannot be sent within the third frame cycle following the request.

Score/Play Speed Packets are broadcast by the cart to the base after completion of each golf hole of play. The base is required to acknowledge the receipt of every Score/Play Speed Packet. The cart also periodically examines whether acknowledges have been received for previous play holes, and if not, resends the Score/Play Speed Packet to the base.

A Distance Traveled Packet is broadcast by the cart to the base only at the completion of each golf round of play. The base is required to acknowledge the receipt of every Distance Traveled Packet. The cart is required to resend a distance traveled packet up to two times if it has not yet received an acknowledge from the base before ceasing operation.

Messages and packets are segregated into base groups and roving groups, with only one base message for the single base station, but as many roving messages as there are roving units on the variable length network. Base message and roving message structures differ for bandwidth efficiency reasons. In this description, the convention is that a byte consists of 8 bits and a word consists of 16 bits (i.e., a double byte), with bit 0 being the least significant bit (LSB) for all bytes and words. In words of a message, the most significant byte is byte 0 and the least significant byte is byte 1. This corresponds to the convention used in Motorola processors, and the Motorola 68332 processor Queued Serial Peripheral Interface (QSPI) transmits and receives the most significant bit first.

A Motorola 68332 Time Processor Unit (TPU) is used for bit synchronization. To support TPU detection of bit synchronization, the bit sync word is $BFFF_{hex}$, and the most significant bit (MSB) of the message identification byte must be low. Also, a selected bit, for example bit 14, of byte 2 is chosen to be high to distinguish a cart-based message from a base station message. Thus, a maximum of 64 ($7F_{hex}$-$40_{hex}$) messages may exist. Details of bit synchronization are discussed in the aforementioned '295 and '905 applications.

The number of bytes in a message is limited to 64K by bytes 3 and 4, with consideration given to the physical hardware synchronization mechanism and stability over time. The header error detection upper nibble are the four error detection bits for bytes 2 and 3 while the lower nibble are the error detection bits for byte 4 and a pad byte. The first packet immediately follows the message header, the second packet immediately follows the first, and so on until all packets are embedded in the message. Any dead (unfilled) space between the last packet and the end of the fixed length message is set to $1_{hex}$ (binary 0000 0001). This pattern minimizes interrupts to the 68332 processor, while establishing the proper state for the next receive message to AC couple data from a receiver quadrature detector. A maximum of 96 bytes (768 bits) may be broadcast from the base in any single base message.

Each base packet has a common structure with unique contents to support software commonality. The common structure is a header byte in the byte 0 packet position, and an error detection word or words as the last four bytes in the packet. The MSB of the header byte may be set to request an acknowledge from the receiving rogue(s), so that up to 128 unique packets can be transmitted from the base to the rogues. For example, a packet identification of $81_{hex}$ is identical to $01_{hex}$ to the receiving rogue except the $81_{hex}$ case requires a hard "acknowledge" from the rogue while an $01_{hex}$ does not. Details as to types and contents of the packets are set forth in the '295 and '905 applications.

A text message packet enables the course manager to send a common message to all golf carts, or to send specific messages to any individual cart. A common message, for example, might be the score of a game, the luncheon special in the clubhouse restaurant or grille, or other information thought to be of interest to all active carts. A unique message to a specific cart might be warnings regarding unauthorized behavior (e.g., driving the cart on the green), or a message from a business associate. Up to 24 characters can be transmitted at one time in a packet; however, up to 16 frames of the packet can be transmitted, which allows a total message length of 384 characters including punctuation and spaces (amounting to about five full text lines). No part of the message is displayed at the cart until all frames have been received successfully, at which time the entire message is displayed in a pop up window.

Many courses change their pin locations on each hole on a daily basis; and tee box locations typically are changed less frequently. The PROLINK system base station broadcasts a pin/tee box placement packet every 16 seconds for each hole of the course. The "power on" default assumption (until an update is available) for all carts is that the pin is in the center of the green and the tee box locations have not changed from the previously stored baseline. Since the packet contains information for one hole, a total of 18 different packets are sent, one each 16 seconds in succession. The pin/tee box placement packet is assigned the lowest order of packet transmission priority.

The PROLINK digital communication system functions are primarily carried out by PCUs **44** and **51** of the base station and PCU **16** of the carts, by the Motorola 68332 microprocessor. Referring back to **FIG. 18**, the digital data transceiver includes a transmitting CPU circuitry **95** with a source encoder **102** for the information source **101**, an encryptor **103** (optional), and a channel encoder **104**, RF transmitting circuitry **96** with a data modulator **105** for transmission over communications channel **107**. On the other side of the communications channel, the transceiver includes a receiving RF circuitry **97** with a data demodulator **109**, and receiving CPU circuitry 98 with bit synchronization **110**, a channel decoder **111**, a decryptor **112** (if an encryptor is used on the transmitting side), and a source decoder **113** for outputting the received information **114**. It is noteworthy that CPU circuitry **95** and **98** are embodied within CPU card **18** of cart PCU **16** and base station PCU's **44** and **51**, while RF circuitry **96** and **97** are embodied within RF card **22** of cart PCU **16** and base station primary and secondary PCU's **44** and **51**. The RF card has no "intelligence ", and is only responsible for modulating and demodulating the data on the carrier. The PROLINK system is partitioned in this manner to substantially reduce recurring cost, with considerable power afforded by the 68332 microcontroller on the CPU card, and obviating a need for an independent microcontroller for proper operation of the RF card.

The RF digital data stream is received by the QSPI, which requires a clock synchronous with the received data to clock the data into a receive shift register. A series of synchronization bits is embedded by the transmitter at the start of the data stream. The receiving PCU TPU detects the synchronization bits and generates the QSPI receive clock.

Bit synchronization is described in detail in the '295 and '905 applications.

The color monitor assembly **19** is mounted inside the golf cart below the roof for ease of viewing by the cart occupants without interfering with the driver's view of the cart path. Such mounting of monitor **19** is significant for allowing color readability in sunlight. A key pad assembly **23** mounted below the base of the monitor, with soft keys, that are software controllable, illustrated in **FIG. 1C**, allows ready access by the cart operator. The PCU **16** is embedded in the cart roof, and a cart power interface box **25** is mounted in the cart out of the way of the occupants.

The key mechanism to be pressed by the golfer using the unit is a small keypad strip that runs just underneath the tube in the monitor. The physical mechanical keys are beneath the software label illuminated on the screen. Soft keys can be reprogrammed as necessary if a particular golfer has a preferable location for a particular key, and that reprogramming is done strictly through software. Similarly, the label for each key is created in software along the bottom strip of the CRT, so that these keys may be reprogrammed to have different meanings at any time. The yardage arrow for the PROLINK unit may be a joy stick assembly, a trackball assembly, or four to eight arrows that allow the golfer to move the arrow around with ease.

CPU video card **18** has two primary sections, comprising a CPU and a video controller, and described in detail in the '295 and '905 applications. The CPU is a Motorola 68332 microprocessor device, with large linear address space that allows it to address up to 16 megabytes (MB) of memory. A single compressed advertisement may occupy 64 kilobytes (KB, or K) of memory, and a 32 bit core for high speed processing efficiencies. The processor supports a large number of peripheral devices on chip through the QSPI constituting a high speed serial interface used to "talk" to peripheral devices, such as RF card 22. The 32 bit microprocessor has an on-chip Time Processing Unit (TPU) that provides a 16 channel input/output timing function capability independent of the processor core, and supports real time interrupt requirements of the system, and bit synchronization on the incoming RF digital data stream.

The CPU also includes a video controller 90C20A available from Western Digital to drive a high resolution color graphics monitor, and to display information on the cart's computer monitor, including advertisements and digital course map details. The device is capable of supporting up to 1 MB of dynamic RAM, and to address and write video imagery data to the RAM. In addition, the 68332 device can access the dynamic RAM through the 90C20A device to update graphics images.

The CPU accepts user commands, controls displays, controls the transfer of data between the individual carts and the base station, and monitors the performance of the RF interface, among other things. CPU control is exercised by the digital electronic processor which directs the operation of the system from EPROM program memory. The memory may contain data describing the golf course including layout and hole maps, distance data, equipment configuration data, RF communications data, diagnostic instructions, advertising matter, and other information necessary for reliable operation and which requires nonvolatile memory storage. RAM memory is used by the processor to perform calculations, and to store communication data, golfer scores or handicaps, and any other transient data necessary to operate the system. The CPU provides an external communications interface for maintenance functions to be performed, golf course data or control program instructions to be updated, and any portion of nonvolatile memory to be either examined or updated.

Individual hole maps for the course, score data, advertising matter, keypad function labels and other information are displayed on the color video monitor **19** from the CPU. The processor expands packed binary data retrieved from flash memory and updates readable/writable memory dedicated to driving the display.

The CPU interface to an RF card at the roving unit enables each golf cart to communicate information to the base station RF card located in the pro shop or other convenient location on the course. The carts calculate their positions using their DR navigation systems, as described above. The mobile RF transmitter transmits serial data to the base station receiver identifying the cart and its location every few seconds. By virtue of these transmissions, the specific location of each cart is determined and identified on the digital mapping display on the base station monitor.

Referring back to **FIG. 3** and the CMC, a precise, digital, color graphic map of the entire golf course displayed on the CMC monitor **54** enables the course administrator to track the location of each cart on the course, including the relationship to features of the hole being played. And the color monitor **19** corresponding to each roving unit automatically displays a map of the particular hole being played, from the time the tee box of the particular hole is approached to the time the cart is driven from the vicinity of the green and toward the location of the tee box for the next hole. The golfer commanding the unit is able to zoom in on a portion of the hole with a specific feature of interest such as a water hazard or a sand trap. These display capabilities are provided by the digital mapping of the course stored in the system, and by the real time data supplied by each roving unit to the CMC as to their respective locations on the course.

This digital map of the golf course is created by use of differential GPS survey techniques. The course features are stored and displayed using a vector-based map storage scheme that provides several advantages over standard bit-mapped graphics representations, including advantages of memory storage, scaling, and rotation. The digital map data base for each hole contains all of the important features of the hole, such as the green, fairway, water hazards, sand traps, grass bunkers, rough areas, cart paths, the pin, and so forth. Each feature is mapped by a series of DGPS position measurements around the perimeter of features that cover an area, such as greens or fairways. An analogous process of data collection is performed along the length of linear features such as cart paths. As a result of the survey, a vector list is compiled to describe each feature, including the outline of an area feature, for example.

The vector list is processed to the extent required to remove spurious data points, smooth out jagged outlines, and close the outline of area-type features. Data points which add little or no information to the map may be deleted to reduce the memory storage requirements of the map data base. Course features associated with a particular hole are combined to form a data base for that hole, for display in distinctive colors. A sand trap for example may be sand color, a water hazard depicted as blue, a green as green, and so forth.

Since each feature of the golf course is surveyed individually, the survey can be easily updated when features are changed by the course. For example, tee box and pin locations for each hole can be programmed into the data base as they are changed, which typically would be daily. Features may be added or removed from the map data base to improve detail or reduce clutter as required.

A vector based map storage and display technique has significant advantages. Memory needs are reduced since only the outlines of map features are stored, thereby allowing detailed features to be represented by very few data points. The area features are drawn and filled from these few stored data points at the time the particular features are displayed. Scaling is also enhanced because in the vector based system, displayed features may be reduced or enlarged on the screen with no loss of information. Additionally, a single feature may be displayed at different magnifications. Also, rotation enjoys similar advantages to scaling in a vector based system, which easily displays features such as the hole map at different orientations, as desired, depending on the overall shape of the hole.

The outline of each object on the golf course is determined by collecting DGPS position data around the perimeter of each object. Objects that are simply linear such as golf cart paths or narrow streams are surveyed by collecting data along them from one end to the other. The output of the receiver as it is moved along the object perimeter are geodetic coordinates at regular time intervals, typically 1 per second. It is understood that universal transverse mercator (UTM) coordinates could also be used instead of geodetic coordinates. These coordinates are stored for later post-processing, and each object is identified by a unique object number and an object type to determine how it is post-processed and drawn when displayed.

The survey data are corrected for selective availability and atmospheric errors using data collected by the reference receiver. Any number of differential GPS methods can be used to remove these common errors from the survey data relative to the reference point.

The survey data are converted for display on both the CMC monitor **54** and the cart monitors **19**, by shifting, scaling and rotating the map data. The north and east vector coordinates of the objects are offset such that one hole or group of holes are coordinatized with respect to the upper left corner of the display. The shifted points are multiplied by a scale factor so that features which may be hundreds of yards long are reduced to fit on a 640 x 480 pixel screen. For the cart display, hole maps are typically rotated so that the tee box of the hole is at the bottom of the screen and the green is at the top. CMC displays are typically rotated so that the map is oriented with north at the top of the screen.

Once the outline of the golf course has been obtained and stored, such data can be used to generate an efficient method for determining and detecting the location of a golf cart within various zones or regions of the golf course. Such a zone detection algorithm implements system features such as automated hole display sequencing, whereby the color monitor of the cart automatically displays the current hole being played, and the speed/pace of play timing both of which require knowledge of where the golf cart is relative to important zones/regions within the golf course such as a particular tee zone or green zone.

The PROLINK system uses "zones" which can be defined geometrically by a circle, an ellipse, a rectangle, or the like. The zone is created by encompassing the area of interest with desired geometric shape(s). With the mathematical description of each area by zone shapes, the coordinates of a golf cart may be compared against each zone to determine whether the golf cart is inside a specific zone, and hence in a specific area of interest. A rectangular zone shape is very efficient for this application, and may be described on the golf course map on an x-y coordinate grid by its center, semi-major and semi-minor axes, and rotation angle of the semi-major axis with respect to the survey grid axis. Given the specific coordinates of a golf cart (x,y), as determined by the cart's DR system, it can be determined through calculation if a golf cart is inside the rectangular zone.

Automatic hole, sequencing is accomplished such that when the system detects that the golf cart leaves the green area of hole 1 and subsequently enters the tee box area of hole 2, the stored outline of hole 2 can be automatically displayed on the color monitor of the golf cart. Also, the feature of automatically displaying high resolution advertisements or pro tips as the cart travels from one hole to the next may be implemented by detecting when the golf cart has just exited an area associated with the green region of a hole and is in transition to the tee box region of the subsequent hole. Additionally, the feature of automatically determining and recording a golfer's pace of play for a hole may be accomplished by starting a timer when the golf cart enters the tee box region associated with a hole and stopping the timer when the golf cart leaves or exits the green region associated with that hole.

When the cart is within a predetermined distance of the tee box for play of a hole, the golfer may press a "PRO TIP" button on the console, wherein the system responds with a pop-up window on the display monitor that furnishes a set of recommendations or suggestions for play of that hole provided by the course professional (the course "pro"). Exemplary displays might be: "Watch sand traps on right side of fairway during drive," or "This green is shared with hole 16 -- approach fuller part of green."

After reviewing the pro tips for the hole, the golfer would want to view the reading of yardage to the pin on the cart monitor, for selection of the appropriate club to drive from the tee. The calculation of the yardage to the pin is calculated by the golf cart's dead reckoning system, calibrated by DGPS data.

Similarly, the golfer may view the range from the cart location to points selected by the course pro as key points of interest for play of the hole, shown on the digital map of the hole when it is displayed on the cart monitor screen. Typically, these would include a lake, a sand trap, or other hazard. The display further shows the location of the cart on the hole being played, e.g., as a white triangle. The specific ranges and graphics displayed on the screen give the player important information for avoiding hazards, especially those which are not visible with the naked eye from the tee box.

The golfer can also use a yardage cursor arrow on the display to determine the best lay up shot. For example, distances from the white triangle to various locations of the golf course as well as to the yardage arrow are displayed so that the golfer has considerable range information available to enable strategic planning of each shot.

By making use of the zone detection algorithm, the PROLINK system has the capability to determine the length of time it takes a golfer to play a hole, a selected plurality of holes, or an entire round of golf. The PROLINK system allows the capability of both the golf cart and the course management system to keep track of the play time using similar algorithms. Briefly, the course management system displays a running timer for each golf cart for the current hole and the round and play times for each hole completed. The golf cart computes the play times for each hole and transmits its times to the course management system. The course management system stores the play speed data for each golf cart so that it may be analyzed off-line.

## Claims

1. A method of obtaining robust distance measurements on a golf course with trees, hills or other obstructions to electromagnetic signals emanating from outside said golf course, said method using a golf-cart-based dead reckoning navigation (DRN) system (510) to assist play of the course, said DRN system of each said golf cart (16) on said course is initialized, the respective said golf cart is repositioned adjacent the new position of a golf ball after each shot of said golf ball by a player using said respective golf cart during play of said course, and from each said repositioning of said respective golf cart the coordinates of the new position of said golf ball are determined by said DRN system relative to said DRN system initialization of said respective golf cart, said new position coordinates are used in conjunction with known locations of fixed hole features such as a designated cup or hazard on a hole of said course being played for calculating the distance (512) from said new position coordinates to said designated cup or other selected ones of said fixed hole features;
**characterized in that**:

each respective golf cart is equipped (21, 516) to receive satellite (14) transmitted global positioning system (GPS) position signals, and at least once during play of said course and only when a said respective golf cart is positioned on said course in an unobstructed line of sight to a sufficient number of GPS position signal transmitting satellites to receive said GPS position signals, said DRN system of said respective unobstructed golf cart is automatically calibrated (519) with said received GPS position signals, without player intervention, to restore the accuracy of said DRN system of said respective golf cart.

2.  The method of claim 1, wherein each said respective golf cart is equipped (517) to receive differential GPS (DGPS) position signals.

3.  The method of any of the preceding claims, in which said calibration is performed using Kalman filter processing.

4.  The method of any of the preceding claims, in which said DRN system includes at least one wheel sensor (534) on each said respective golf cart for encoding rotations of the wheel utilizing said wheel sensor to determine speed of said respective golf cart, and further includes means (533) for determining heading of said respective golf cart.

5.  The method of claim 4, wherein said at least one wheel sensor is provided in conjunction with a front wheel (551) of said respective golf cart.

6.  The method of any of the preceding claims, in which each said respective golf cart is provided with at least one front wheel sensor for measuring wheel speed and a compass for determining magnetic heading of said respective golf cart.

7.  The method of claim 6, wherein a floated compass (533) is used for said compass, to avoid tilt errors when said respective golf cart is on an incline of said course.

**Patentansprüche**

1.  Verfahren zum Erhalten aussagekräftiger Entfernungsmessungen auf einer Golfbahn mit Bäumen, Hügeln oder anderen Hindernissen für elektromagnetische Signale, die von außerhalb der Golfbahn stammen, wobei das Verfahren ein auf einem Golfwagen angeordnetes Koppelnavigations- (DRN-) System (510) zur Unterstützung des Spieles auf der Bahn verwendet, wobei das DRN-System eines jeden Golfwagens (16) auf der Bahn initialisiert wird, der jeweilige Golfwagen nahe der neuen Position eines Golfballes nach jedem Schlag des Golfballes durch einen Spieler, der den jeweiligen Golfwagen während des Spielens der Bahn benutzt, neu positioniert wird und aus jeder Neupositionierung des jeweiligen Golfwagens die Koordinaten der neuen Position des Golfballes durch das DRN-System in bezug auf die Initialisierung des DRN-Systemes des jeweiligen Golfwagens bestimmt werden, wobei die Koordinaten der neuen Position in Verbindung mit bekannten Orten von festen Lochmerkmalen wie einem bestimmten Lochbecher oder einem Hindernis an einem Loch der bespielten Bahn verwendet werden, um die Entfernung (512) von den Koordinaten der neuen Position zu dem bestimmten Lochbecher oder einem anderen ausgewählten festen Lochmerkmal zu berechnen, **dadurch gekennzeichnet, dass**:

    jeder Golfwagen ausgerüstet ist (21, 516), um Positionssignale zu empfangen, die von einem globalen Positionssystem (GPS) über einen Satelliten (14) übermittelt werden, und zwar wenigstens einmal während des Spielens der Bahn und nur dann, wenn ein jeweiliger Golfwagen auf der Bahn in einer unbehinderten Sichtlinie zu einer ausreichenden Zahl von GPS-Positionssignalen übermittelnden Satelliten positioniert ist, um diese GPS-Positionssignale zu empfangen, und das DRN-System des jeweiligen unbehinderten Golfwagens automatisch mit den empfangenen GPS-Positionssignalen ohne Eingriff seitens des Spielers kalibriert (519) wird, um die Genauigkeit des DRN-Systems des jeweiligen Golfwagens wieder herzustellen.

2.  Verfahren nach Anspruch 1, wobei jeder Golfwagen ausgerüstet (517) ist, um differenzielle GPS- (DGPS-) Positionssignale zu empfangen.

3.  Verfahren nach einem der vorhergehenden Ansprüche, bei dem die Kalibrierung unter Verwendung von Kalman-Filterverfahren durchgeführt wird.

4.  Verfahren nach einem der vorhergehenden Ansprüche, bei dem das DRN-System zumindest einen Radsensor (534) an jedem Golfwagen aufweist, um die Umdrehungen des Rades unter Verwendung des Radsensors zu kodieren, um die Geschwindigkeit des jeweiligen Golfwagens zu bestimmen, und das ferner Einrichtungen (533) zum Bestimmen des Kurses des jeweiligen Golfwagens aufweist.

**5.** Verfahren nach Anspruch 4, wobei der zumindest eine Radsensor in Verbindung mit einem Vorderrad (551) des jeweiligen Golfwagens verwendet wird.

**6.** Verfahren nach einem der vorhergehenden Ansprüche, bei dem jeder Golfwagen mit zumindest einem Vorderradsensor zum Messen der Radgeschwindigkeit und einem Kompass zum Bestimmen der magnetischen Ausrichtung des jeweiligen Golfwagens versehen ist.

**7.** Verfahren nach Anspruch 6, wobei als Kompass ein Schwimmkompass (533) verwendet wird, um Neigungsfehler zu verhindern, wenn der jeweilige Golfwagen sich auf einem Abhang der Bahn befindet.

**Revendications**

**1.** Une méthode de mesure de distance précise sur un terrain de golf comprenant des arbres, monticules ou autres obstacles aux champs électromagnétiques d'origine extérieure audit terrain de golf, ladite méthode utilisant un système (510) de navigation à l'estime (DRN - Dead Reckoning Navigation) placé sur un chariot de golf, dont l'objectif est l'aide au jeu, ledit système DRN placé sur chaque chariot de golf (16) sur ledit terrain est initialisé, chaque chariot étant repositionné près de la nouvelle position de la balle de golf après chaque envoi de ladite balle de golf par un joueur utilisant ledit chariot de golf pendant la partie sur ledit terrain, et à partir de chaque repositionnement dudit chariot de golf, les coordonnées de la nouvelle position de ladite balle de golf sont calculées par ledit système DRN par rapport à l'initialisation dudit système DRN dudit chariot de golf, lesdites coordonnées de la nouvelle position sont utilisées conjointement avec les positions connues des éléments fixes d'un trou tels qu'une coupe désignée ou un obstacle naturel d'un trou dudit terrain sur lequel on joue pour calculer la distance (512) entre lesdites coordonnées de la nouvelle position et ladite coupe désignée ou autres coordonnées d'éléments fixes d'un trou sélectionnées; **caractérisé en ce que**:

chaque chariot de golf est équipé (21, 516) de manière à recevoir des signaux de position transmis par satellite (14) via le système mondial de radiorepérage (GPS - Global Positioning System), et au moins une fois pendant la partie sur ledit terrain et seulement si un chariot de golf désigné se trouve sur ledit terrain sur une ligne de visée dégagée d'un nombre suffisant de satellites transmettant des signaux de position GPS pour recevoir lesdits signaux de position GPS, ledit système DRN dudit chariot de golf visible est automatiquement calibré (519) par rapport auxdits signaux de position GPS reçus, sans que le joueur n'intervienne, afin de rétablir l'exactitude dudit système DRN dudit chariot de golf.

**2.** La méthode de la revendication 1, où chaque chariot de golf désigné est équipé (517) de manière à recevoir des signaux de position GPS différentiel(DGPS).

**3.** La méthode de l'une des revendications précédentes, où le calibrage est réglé en utilisant le processus du filtre de Kalman.

**4.** La méthode de l'une des revendications précédentes, où le système DRN comporte au moins un capteur de vitesse de roue (534) sur chaque chariot de golf désigné pour coder les rotations de la roue en utilisant ledit capteur de vitesse de roue afin de déterminer la vitesse dudit chariot de golf, et comporte de plus des moyens (533) pour déterminer la direction dudit chariot de golf.

**5.** La méthode de la revendication 4, où au moins un capteur de vitesse de roue est fourni conjointement avec une roue avant (551) dudit chariot de golf.

**6.** La méthode de l'une des revendications précédentes, où chacun desdits chariots de golf est fourni avec au moins un capteur de vitesse de roue avant pour mesurer la vitesse de la roue et un compas pour déterminer la direction magnétique dudit chariot de golf.

**7.** Une méthode de la revendication 6, où un compas flottant (533) est utilisé avec ledit compas, afin d'éviter les erreurs d'inclinaison quand ledit chariot de golf se trouve sur une inclinaison dudit terrain.

GPS SATELLITES

BASE STATION COM-
PUTER—EXECUTING
LET SOFTWARE

14

10

11

GPS
RECEIVER

25

DIGITAL DATA

12

LET DESIGN
TRANSCEIVER

15

16

**FIG. 1A**

**FIG. 1C**

23

FIG. 1B

EP 0 966 690 B1

## FIG. 2

GPS DATA

GPS SATELLITES

14-1,...,14-n

GPS DATA

10-1

PROLINK COURSE
MANAGEMENT STATION

COURSE COMMUNICATIONS NETWORK

25

PROLINK CART 1

15-1

NAMES/PRINT OUT/DATA DISK

31

TELEPHONE LINE

28

EXTERNAL WORLD INTERFACE

30

GOLFER DATA

33

PROLINK CART n

15-n

OUTSIDE WORLD

## FIG. 18

| 95 | 101 | 102 | 103 | 104 | 96 | 105 |
|---|---|---|---|---|---|---|
| | INFORMATION SOURCE | SOURCE ENCODER | ENCRYPTOR | CHANNEL ENCODER | DATA MODULATOR | |

NOISE — CHANNEL

107

| 98 | 114 | 113 | 112 | 111 | 110 | |
|---|---|---|---|---|---|---|
| | INFORMATION RECEIVED | SOURCE DECODER | DECRYPTOR | CHANNEL DECODER | BIT SYNCHRONIZATION | DATA DEMODULATOR |

109

97

**FIG. 3**

FIG. 4

44,51

DIGITAL DATA TRANSCEIVER CARD  22

DIGITAL DATA
SIGNAL STRENGTH
TRANSMIT KEY
FREQUENCY PGMING

CPU CARD  18

RS-232 INTERFACE — TO INTERFACE CONVERTER 53

MAINTENANCE INTERFACE

+12VDC  +5VDC

POWER DISTRIBUTION CARD  24

+15VDC

EP 0 966 690 B1

## FIG. 5

**32 Hz TASK** — 62
- MORSE CODE STATION ID

**16 Hz TASK** — 64
- PRIMARY PCU
  SERIAL INTERFACE
- SECONDARY PCU
  SERIAL INTERFACE
- OPTIONAL REPEATER
  PCU SERIAL INTERFACE
- COURSE MANAGEMENT
  TERMINAL SERIAL
  INTERFACE

(START) — 60

**SYSTEM INITIALIZATION**
- GPS RECEIVER
- PC HARDWARE INIT.
- LOAD FILES

**1 Hz TASK** — 66
- SELF TEST MONITOR
- GPS RECEIVER INTERFACE
- GPS DATA CONVERSION

**1 Hz TIME CRITICAL TASKS** — 68
- TASKS STARTED BY
  64 Hz TIMER

**NETWORK CONTROLLER 1** — 70
- UPDATE NETWORK FRAME
  COUNTERS
- CHECK NETWORK DUTY
  CYCLE
- CHECK NETWORK HALT
  STATUS
- UPDATE CART SPEED
  OF PLAY TIMERS

**CHANNEL MANAGER** — 72
- CONTROL CHANNEL
  CHANGE
- CONTROL STATION ID

**ROGUE MANAGER** — 74
- PROCESS NEW DATA FROM
  EACH CART
- LOOK FOR CART NETWORK
  ENTRY OR EXIT REQUESTS
- QUEUE CART RETRANSMIT
  REQUESTS

**NETWORK MANAGER** — 76
- CONTROL NETWORK SIZE

**NETWORK CONTROLLER 2** — 78
- FORMAT NETWORK
  CONTROL PACKETS

**ROGUE CONTROLLER** — 80
- FORMAT ROUGUE
  CONTROL PACKETS

**MESSAGE MANAGER** — 82
- FORMAT TEXT
  MESSAGE PACKETS
- FORMAT PIN/
  TEE MESSAGES

**CM BLOCK UPLOADER** — 84
- DEFINE PACKET PRIORITIES
  FOR FRAME
- FORMAT DGPS PACKETS
- PACKS CM MESSAGE BLOCK

EP 0 966 690 B1

# FIG. 6

**DISPLAY HOLES**

1 - SINGLE HOLE
2 - FRONT 9
3 - BACK 9
4 - HOLES 1,2
5 - HOLES 3,4,5,6
6 - HOLES 7,8,9
7 - HOLES 10,11
8 - HOLES 12,13,14,15
9 - HOLES 16,17,18

ESC TO RETURN TO MAIN

**CART REQUESTS**

HOLE 15   HOLE 14   HOLE 13

BACK 9

HOLE 16

HOLE 12

HOLE 18

HOLE 17

HOLE 11

HOLE 10

# FIG. 7

FRONT 9

**MAIN MENU**

1 - SEND A MESSAGE
2 - DISPLAY HOLES
3 - PIN/TEE PLACEMENT
4 - PLAY SPEED
U - UTILITIES

CTRL-X TO EXIT

**CART REQUESTS**

ENTER TEXT THAT WILL BE SENT TO GOLFER(S)
>>MR SMITH PLEASE CALL YOUR OFFICE*

EP 0 966 690 B1

```
                          ┌──────────┐
                          │  ROBUST  │
                    510 ──│NAVIGATION│
                          │  SYSTEM  │
                          └──────────┘
          512                              513
   ┌──────────────┐                  ┌──────────────────┐
   │  DISTANCE    │                  │ LOCATION OF GOLF  │
   │ MEASUREMENTS │◄──          ──►  │ CARTS FOR COURSE  │
   │  FOR GOLFER  │                  │   MANAGEMENT      │
   └──────────────┘                  └──────────────────┘
```

# FIG. 8

```
                    ┌ ─ ─ ─ ─ ─ ─ ─ ─ ─ ─ ─ ─ ─ ─ ─ ─ ─ ─ ─ ─ ┐
                         DR NAV ALGORITHMS
                    │                                          │
                              DR NAV SOL
                    │        VEL,POS   +                       │
  ┌──────────┐      │  ┌────────────┐      ⊙                   │
  │DR SENSORS│──────►  │   SENSOR   │──●──────  SOLUTION ──────────► CORRECTED DR NAV
  └──────────┘      │  │ PROCESSING │   SENSOR  +  CORRECTION  │
                       └────────────┘   CORRECTION
                    │         ▲                                │
                    └ ─ ─ ─ ─ ┼ ─ ─ ─ ─│─ ─ ─ ─ ─ ─│─ ─ ─ ─ ─ ┘
                              │         │           │
                    ┌ ─ ─ ─ ─ ┼ ─ ─ ─ ─│─ ─ ─ ─ ─ ─│─ ─ ─ ─ ─ ┐
                              │         ▼  RESIDUAL │
                    │                               │          │
  FIG. 17              ┌───────────┐  DGPS DATA   ⊙      ┌───┐
                    │  │DGPS SENSOR│─────────────  Z────►│ K │─ │
                       └───────────┘        +           └───┘
                    │                     ┌──────────┐    ▲ K   │
                                          │CORRECTION│    │
                    │                     │   GAIN   │────┘     │
                       DGPS CALIBRATOR    │COMPUTATION│
                    │                     └──────────┘          │
                    └ ─ ─ ─ ─ ─ ─ ─ ─ ─ ─ ─ ─ ─ ─ ─ ─ ─ ─ ─ ─ ─┘
```

FIG. 9

FIG. 13

FIG. 16

# FIG. 10A

526 · 523

525

529

528

# FIG. 10B

524

526

529

528

# FIG. 11A

530

531

# FIG. 11B

531 · 530

OR NAV ALGORITHMS

OR SENSORS

FIG. 12

(1) WHEEL SF ERROR CORRECTION FROM DGPS CALIBRATOR

(2) COMPASS CORRECTIONS FROM DGPS CALIBRATOR

(3)(4) POSITION ERROR CORRECTIONS FROM DGPS CALIBRATOR

EP 0 966 690 B1

**FIG. 14**

(1) WHEEL SF CORRECTION FROM DGPS CALIBRATOR

(2) COMPASS CORRECTIONS FROM DGPS CALIBRATOR

(3)(4) POSITION ERROR CORRECTIONS FROM DGPS CALIBRATOR

EP 0 966 690 B1

OR NAV ALGORITHMS

OR SENSORS

LEFT FRONT WHEEL SPEED $V_{LF}$

560 — LEFT FRONT WHEEL ENCODER

PULSES $\rightarrow$ $SF_L$ ① $\rightarrow$ M/SEC $\rightarrow$ LPF

RIGHT FRONT WHEEL SPEED $V_{RF}$

561 — RIGHT FRONT WHEEL ENCODER

PULSES $\rightarrow$ $SF_R$ ② $\rightarrow$ M/SEC $\rightarrow$ LPF

567 — SPEED AND ANGULAR RATE ESTIMATOR ③ ④

$\dot{\psi}$ $\rightarrow$ ∫ ⑤ $\rightarrow$ $\psi$

$w$, $v$

COS( ) ⊗ $\rightarrow$ $V_n$ ⑥ $\rightarrow$ ∫ $\rightarrow$ $P_n$

SIN( ) ⊗ $\rightarrow$ $V_e$ $\rightarrow$ ∫ ⑦ $\rightarrow$ $P_e$

①, ② WHEEL SF ERROR CORRECTION FROM DGPS CALIBRATOR

③ WHEEL BASE ESTIMATE FROM DGPS CALIBRATOR

④ AXLE WIDTH ESTIMATE FROM DGPS CALIBRATOR

⑤ HEADING ERROR CORRECTION FROM DGPS CALIBRATOR

⑥, ⑦ POSITION ERROR CORRECTIONS FROM DGPS CALIBRATOR

**FIG. 15**

47

**FIG. 19**

FRAME RATE = 1 ONE PER SECOND

EACH FRAME CONTAINS:
1. DGPS CORRECTION PACKET
2. CMC PACKET
3. CART NETWORK ENTRY PACKET
4. CART STATE PACKET

ANY NUMBER OF ADDITIONAL FRAMES
CAN BE ADDED INTO THE NETWORK AT ANY TIME.

## FIG. 20

FRAME 0
FRAME n
FRAME 1
FRAME 2

## FIG. 21

BIT RATE =
2048 BITS PER SECOND

5 BIT GAP
TIME (2.44 ms)

9 BIT GAP
TIME (4.39 ms)

5 BIT GAP
TIME (2.44 ms)

9 BIT GAP
TIME (4.39 ms)

0

1

2

DGPS CORRECTION
PACKET (512 BITS)

CMC MESSAGE
PACKET (368 BITS)

CART NETWORK
ENTRY PACKET
(56 BITS)

CART 1
PACKET
(56 BITS)

CART 2
PACKET
(56 BITS)

CART 3
PACKET
(56 BITS)

CART 18
PACKET
(56 BITS)

DGPS CORRECTION
PACKET (512 BITS)

CMC MESSAGE
PACKET (368 BITS)

CART NETWORK
ENTRY PACKET
(56 BITS)

CART 19
PACKET
(56 BITS)

CART 20
PACKET
(56 BITS)

CART 21
PACKET
(56 BITS)

CART 36
PACKET
(56 BITS)

TIME IN SECONDS

EP 0 966 690 B1